# EUROPEAN PATENT APPLICATION

(11) **EP 4 387 351 A1**
(43) Date of publication of application: **19.06.2024**
(21) Application number: 22871756.7
(22) Date of filing: 29.08.2022
(51) Int. Cl.: H04W 68/02

(54) **COMMUNICATION METHOD AND DEVICE**

(30) Priority: 22.09.2021 CN 202111109055; 18.10.2021 CN 202111209367
(71) Applicant: Huawei Technologies Co., Ltd., Shenzhen, Guangdong 518129 (CN)
(72) Inventor: KUANG, Yiru, Shenzhen, Guangdong 518129 (CN); XU, Haibo, Shenzhen, Guangdong 518129 (CN); HAN, Feng, Shenzhen, Guangdong 518129 (CN)
(74) Representative: MERH-IP Matias Erny Reichl Hoffmann Patentanwälte PartG mbB
(86) International application number: PCT/CN2022/115404
(87) International publication number: WO 2023/045704

(57) **Abstract**

This application relates to a communication method and device. A first message is received from a base-station central unit, where the first message is for determining whether a to-be-paged terminal device supports a first grouping manner and/or determining a paging manner for the to-be-paged terminal device. The terminal device is paged in a first paging manner, where the first paging manner is determined based on the first message. A base-station distributed unit can determine, based on the first message, whether the to-be-paged terminal device supports a grouping manner or a grouping manner that can be supported by the to-be-paged terminal device, thereby paging the terminal device in the corresponding paging manner (for example, a grouping paging manner or a non-grouping paging manner). In this way, in a split architecture, the base-station distributed unit can also complete paging on the terminal device.

## Description

### CROSS-REFERENCE TO RELATED APPLICATIONS

This application claims priorities to Chinese Patent Application No. 202111109055.2, filed with the China National Intellectual Property Administration on September 22, 2021 and entitled "COMMUNICATION METHOD, TERMINAL, AND NETWORK DEVICE", and to Chinese Patent Application No. 202111209367.0, filed with the China National Intellectual Property Administration on October 18, 2021 and entitled "COMMUNICATION METHOD AND DEVICE", both of which are incorporated herein by reference in their entireties.

### TECHNICAL FIELD

This application relates to the field of communication technologies, and in particular, to a communication method and device.

### BACKGROUND

A discontinuous reception (discontinuous Reception, DRX) mechanism in a long term evolution (long term evolution, LTE) technology continues to be used in a fifth generation mobile communication technology (the 5th generation, 5G) new radio (new radio, NR) technology, where the DRX mechanism includes a DRX cycle. A user equipment (user equipment, UE) periodically "wakes up" for a period of time based on the DRX cycle, and may remain in a "sleep" state in remaining time in the DRX cycle, to reduce power consumption. When the UE is in a radio resource control (radio resource control, RRC) idle (idle) state and an RRC inactive (inactive) state, if a core network (core network, CN) or a base station needs to send downlink data to the UE (where for example, there is a call for the UE, or there is data that needs be sent to the UE), the core network or the base station first sends a paging (paging) message to the UE to page the UE. After receiving the paging message, the UE initiates an RRC connection setup process, thereby receiving the downlink data.

To further reduce the power consumption of the UE, a UE grouping-based paging mechanism is proposed. To be specific, UEs are divided into a plurality of groups, and the base station may indicate a specific group or specific groups, where a UE in the specific group or UEs in the specific groups are paged. In this case, the paged UE may further receive the paging message, and an unpaged UE may not need to monitor the paging message. If the base station needs to page a UE, the base station may determine whether the UE can be paged in a grouping manner. If the UE can be paged in the grouping manner, the base station may send a paging early indication (paging early indication, PEI)/a wake-up signal (wake-up signal, WUS), and indicate, in the PEI/the WUS, a group number of a group to which the UE belongs, to page the UE. Currently, there are two grouping manners in the UE grouping-based paging mechanism: ① a grouping manner controlled by the core network, also referred to as a grouping manner allocated by the core network; and ② a grouping manner controlled by a radio access network (radio access network, RAN), also referred to as a grouping manner that is based on a UE ID. One UE may support both of the two grouping manners or only either of the grouping manners, or may support no grouping manner.

In a 5G NR system, the base station (for example, a gNB) is reconstructed into two logical network elements: a base-station central unit (gNB central unit, gNB-CU) and a base-station distributed unit (gNB distributed unit, gNB-DU). Based on different scenarios and requirements, the two logical network elements may be deployed in an integrated or separate manner. Such a network architecture is referred to as a CU-DU split architecture for short hereinafter. In the CU-DU split architecture, the gNB-DU is responsible for sending the PEI/the WUS. However, the gNB-DU does not know whether the UE supports a grouping manner or which grouping manner is supported by the UE. Therefore, the gNB-DU may not be able to page the UE.

### SUMMARY

Embodiments of this application provide a communication method and device, so that a base-station distributed unit can page a UE.

According to a first aspect, a first communication method is provided. The method may be executed by a base-station distributed unit, a larger device including the base-station distributed unit, or a chip system or another function module. The chip system or the function module can implement a function of the base-station distributed unit, and the chip system or the function module is, for example, disposed in the base-station distributed unit. The base-station distributed unit is, for example, a functional unit included in a base station. The method includes: receiving first message from a base-station central unit, where the first message is for determining whether a to-be-paged terminal device supports a first grouping manner and/or determining a paging manner for the to-be-paged terminal device; and paging the terminal device in a first paging manner, where the first paging manner is determined based on the first message.

In this embodiment of this application, the base-station central unit may send the first message to the base-station distributed unit, where the first message may indicate whether the to-be-paged terminal device supports the first grouping manner, and/or the first message may be for determining the paging manner for the to-be-paged terminal device. In this way, the base-station distributed unit can determine, based on the first message, whether the to-be-paged terminal device supports a grouping manner or a grouping manner that can be supported by the to-be-paged terminal device, thereby paging the terminal device in the corresponding paging manner (for example, a grouping paging manner or a non-grouping paging manner). In this way, in a CU-DU split architecture, the base-station distributed unit can also complete paging on the terminal device.

With reference to the first aspect, in a first optional implementation of the first aspect, the first message includes a first group identifier; and if the base-station distributed unit supports a second grouping manner, the first paging manner is performing paging based on the second grouping manner, where the first group identifier is an identifier of a group to which the terminal device belongs in the second grouping manner; the first message includes a first group identifier and information indicating whether the terminal device supports the first grouping manner, where the first group identifier is an identifier of a group to which the terminal device belongs in a second grouping manner; and if the base-station distributed unit does not support the second grouping manner but supports the first grouping manner, and the information indicating whether the terminal device supports the first grouping manner indicates that the terminal device supports the first grouping manner, the first paging manner is performing paging based on the first grouping manner; the first message includes a first group identifier and information indicating whether the terminal device supports the first grouping manner, where the first group identifier is an identifier of a group to which the terminal device belongs in a second grouping manner; and if the base-station distributed unit does not support the second grouping manner but supports the first grouping manner, and the information indicating whether the terminal device supports the first grouping manner indicates that the terminal device does not support the first grouping manner, the first paging manner is performing paging based on a non-grouping manner; or if the base-station distributed unit supports neither a second grouping manner nor the first grouping manner, the first paging manner is performing paging based on a non-grouping manner. The base-station distributed unit may select an appropriate manner based on a supporting status of the base-station distributed unit for a grouping manner and content included in the first message, to page the terminal device, thereby completing paging on the terminal device and improving a paging success rate. The base-station central unit may send, to the base-station distributed unit, the information indicating whether the terminal device supports the first grouping manner, so that the base-station distributed unit can learn of a supporting status of the terminal device for the grouping manner.

With reference to the first aspect, in a second optional implementation of the first aspect, the first message includes information indicating whether the terminal device supports the first grouping manner but does not include a first group identifier, where the first group identifier is an identifier of a group to which the terminal device belongs in a second grouping manner; and if the base-station distributed unit supports the first grouping manner, and the information indicating whether the terminal device supports the first grouping manner indicates that the terminal device supports the first grouping manner, the first paging manner is performing paging based on the first grouping manner; the first message includes information indicating whether the terminal device supports the first grouping manner but does not include a first group identifier, where the first group identifier is an identifier of a group to which the terminal device belongs in a second grouping manner; and if the base-station distributed unit supports the first grouping manner, and the information indicating whether the terminal device supports the first grouping manner indicates that the terminal device does not support the first grouping manner, the first paging manner is performing paging based on a non-grouping manner; or the first message does not include a first group identifier, where the first group identifier is an identifier of a group to which the terminal device belongs in a second grouping manner; and if the base-station distributed unit does not support the first grouping manner, the first paging manner is performing paging based on a non-grouping manner. The base-station distributed unit may select an appropriate manner based on a supporting status of the base-station distributed unit for a grouping manner and content included in the first message, to page the terminal device, thereby completing paging on the terminal device and improving a paging success rate.

With reference to the first aspect, in a third optional implementation of the first aspect, the first message includes a first group identifier, where the first group identifier is an identifier of a group to which the terminal device belongs in a second grouping manner; and if the base-station di stributed unit supports the second grouping manner, the first paging manner is performing paging based on the second grouping manner; if the base-station distributed unit does not support a second grouping manner but supports the first grouping manner, and the first message further indicates to use the first grouping manner, the first paging manner is performing paging based on the first grouping manner; if the base-station distributed unit does not support a second grouping manner but supports the first grouping manner, and the first message further indicates not to use the first grouping manner, the first paging manner is performing paging based on a non-grouping manner; or if the base-station distributed unit supports neither a second grouping manner nor the first grouping manner, the first paging manner is performing paging based on a non-grouping manner. The base-station distributed unit may select an appropriate manner based on a supporting status of the base-station distributed unit for a grouping manner and content included in the first message, to page the terminal device, thereby completing paging on the terminal device and improving a paging success rate. The base-station central unit may indicate, to the base-station distributed unit, whether to use the first grouping manner, so that the base-station distributed unit can learn, based on the first message without obtaining capability information of the terminal device (for example, information indicating whether the terminal device supports the first grouping manner), whether the first grouping manner can be used. In this way, implementation of the base-station distributed unit is simpler.

With reference to the first aspect, in a fourth optional implementation of the first aspect, the first message does not include a first group identifier, where the first group identifier is an identifier of a group to which the terminal device belongs in a second grouping manner, where if the base-station distributed unit supports the first grouping manner, and the first message further indicates to use the first grouping manner, the first paging manner is performing paging based on the first grouping manner; if the base-station distributed unit supports the first grouping manner, and the first message further indicates not to use the first grouping manner, the first paging manner is performing paging based on a non-grouping manner; if the first message further indicates not to use the first grouping manner, the first paging manner is performing paging based on a non-grouping manner; or if the base-station distributed unit does not support the first grouping manner, the first paging manner is performing paging based on a non-grouping manner. The base-station distributed unit may select an appropriate manner based on a supporting status of the base-station distributed unit for a grouping manner and content included in the first message, to page the terminal device, thereby completing paging on the terminal device and improving a paging success rate. The base-station central unit may indicate, to the base-station distributed unit, whether to use the first grouping manner, so that the base-station distributed unit can learn, based on the first message without obtaining capability information of the terminal device (for example, information indicating whether the terminal device supports the first grouping manner), whether the first grouping manner can be used. In this way, implementation of the base-station distributed unit is simpler.

According to a second aspect, a second communication method is provided. The method may be executed by a base-station central unit, a larger device including the base-station central unit, or a chip system or another function module. The chip system or the function module can implement a function of the base-station central unit, and the chip system or the function module is, for example, disposed in the base-station central unit. The base-station central unit is, for example, a functional unit included in a base station. The method includes: receiving a second message from a core network device, where the second message includes information indicating whether a to-be-paged terminal device supports a first grouping manner; and sending a first message to a base-station distributed unit, where the first message is for determining whether the terminal device supports the first grouping manner and/or determining a paging manner for the terminal device.

For beneficial effects of the second aspect, refer to the descriptions of the beneficial effects of the first aspect or any optional implementation.

According to a third aspect, a first communication system is provided. The communication system includes a base-station central unit and a base-station distributed unit. The base-station central unit is configured to: receive a second message from a core network device, where the second message includes information indicating whether a to-be-paged terminal device supports a first grouping manner; and send a first message to the base-station distributed unit, where the first message is for determining whether the terminal device supports the first grouping manner and/or determining a paging manner for the terminal device. The base-station distributed unit is configured to: receive the first message from the base-station central unit; and page the terminal device in a first paging manner, where the first paging manner is determined based on the first message.

For beneficial effects of the third aspect, refer to the descriptions of the beneficial effects of the first aspect or any optional implementation.

According to a fourth aspect, a third communication method is provided. The method may be executed by a base-station central unit, a larger device including the base-station central unit, or a chip system or another function module. The chip system or the function module can implement a function of the base-station central unit, and the chip system or the function module is, for example, disposed in the base-station central unit. The base-station central unit is, for example, a functional unit included in a base station. The method includes: determining whether a base-station distributed unit supports a second grouping manner; and sending first information to the base-station distributed unit, where the first information indicates whether the base-station distributed unit supports the second grouping manner. According to the method provided in this embodiment of this application, the base-station distributed unit can determine whether the base-station distributed unit supports the second grouping manner, thereby broadcasting corresponding information. In this way, a terminal device can determine a supporting case of a current cell for the second grouping manner, so that the terminal device receives paging in a corresponding grouping manner.

With reference to the fourth aspect, in a first optional implementation of the fourth aspect, if the first information indicates that the base-station distributed unit supports the second grouping manner, the first information further indicates a maximum group quantity supported by the base-station distributed unit in the second grouping manner; if the first information indicates that the base-station distributed unit supports the second grouping manner, the method further includes: sending second information to the base-station distributed unit, where the second information indicates a maximum group quantity supported by the base-station distributed unit in the second grouping manner; or that the first information indicates whether the base-station distributed unit supports the second grouping manner includes: The first information indicates a maximum group quantity supported by the base-station distributed unit in the second grouping manner. If the first information indicates that the base-station distributed unit supports the second grouping manner, the maximum group quantity that can be supported by the base-station distributed unit in the second grouping manner is further involved. In this case, the base-station central unit may indicate, to the base-station distributed unit, the maximum number of groups that can be supported by the base-station distributed unit in the second grouping manner, so that the base-station distributed unit determines the number. There may be a plurality of flexible indication manners.

With reference to the fourth aspect or the first optional implementation of the fourth aspect, in a second optional implementation of the fourth aspect, the first information further indicates whether the base-station distributed unit supports a first grouping manner; or the method further includes: sending third information to the base-station distributed unit, where the third information indicates whether the base-station distributed unit supports a first grouping manner. A grouping manner includes the first grouping manner in addition to the second grouping manner, and the base-station distributed unit also supports or does not support the first grouping manner. If the base-station central unit determines whether the base-station distributed unit supports the first grouping manner, the base-station central unit may indicate, to the base-station distributed unit, whether the base-station distributed unit supports the first grouping manner. In this case, the base-station distributed unit can determine whether the base-station distributed unit supports the first grouping manner, thereby broadcasting corresponding information. In this way, the terminal device can determine whether a supporting status of a current cell for the first grouping manner, so that the terminal device receives paging in a corresponding grouping manner.

With reference to the second optional implementation of the fourth aspect, in a third optional implementation of the fourth aspect, if the third information indicates that the base-station distributed unit supports the first grouping manner, the third information further indicates a maximum group quantity supported by the base-station distributed unit in the first grouping manner; if the third information indicates that the base-station distributed unit supports the first grouping manner, the method further includes: sending fourth information to the base-station distributed unit, where the fourth information indicates a maximum group quantity supported by the base-station distributed unit in the first grouping manner; or that the third information indicates whether the base-station distributed unit supports a first grouping manner includes: The third information indicates a maximum group quantity supported by the base-station distributed unit in the first grouping manner. If the third information indicates that the base-station distributed unit supports the first grouping manner, the maximum group quantity that can be supported by the base-station distributed unit in the first grouping manner is further involved. In this case, the base-station central unit may indicate, to the base-station distributed unit, the maximum number of groups that can be supported by the base-station distributed unit in the first grouping manner, so that the base-station distributed unit determines the number. There may be a plurality of flexible indication manners.

According to a fifth aspect, a fourth communication method is provided. The method may be executed by a base-station distributed unit, a larger device including the base-station distributed unit, or a chip system or another function module. The chip system or the function module can implement a function of the base-station distributed unit, and the chip system or the function module is, for example, disposed in the base-station distributed unit. The base-station distributed unit is, for example, a functional unit included in a base station. The method includes: receiving first information from a base-station central unit, where the first information indicates whether the base-station distributed unit supports a second grouping manner.

For beneficial effects brought by the fifth aspect, refer to the descriptions of the beneficial effects of the fourth aspect or any optional implementation.

According to a sixth aspect, a second communication system is provided. The communication system includes a base-station central unit and a base-station distributed unit. The base-station central unit is configured to: determine whether the base-station distributed unit supports a second grouping manner; and send first information to the base-station distributed unit, where the first information indicates whether the base-station distributed unit supports the second grouping manner. The base-station distributed unit is configured to receive the first information from the base-station central unit.

For beneficial effects brought by the sixth aspect, refer to the descriptions of the beneficial effects of the fourth aspect or any optional implementation.

According to a seventh aspect, a fifth communication method is provided. The method may be executed by a base-station central unit, a larger device including the base-station central unit, or a chip system or another function module. The chip system or the function module can implement a function of the base-station central unit, and the chip system or the function module is, for example, disposed in the base-station central unit. The base-station central unit is, for example, a functional unit included in a base station. The method includes: sending a first message to a base-station distributed unit, where the first message includes first time information, the first time information is for determining time within which an RRC release message is sent to a terminal device, and the RRC release message is for releasing the terminal device from an RRC connected state to an RRC idle state or an RRC inactive state. According to the solution provided in this embodiment of this application, the base-station distributed unit determines the duration within which the RRC release message needs to be sent to the terminal device, so that the terminal device can correctly receive the RRC release message. In this way, the base-station distributed unit can send the RRC release message to the terminal device within the time within which the terminal device can correctly receive the RRC release message. A problem of state misalignment between a network device (for example, the base-station central unit) and the terminal device is avoided as much as possible, and deterioration of performance of the terminal device can be avoided as much as possible.

According to an eighth aspect, a sixth communication method is provided. The method may be executed by a base-station distributed unit, a larger device including the base-station distributed unit, or a chip system or another function module. The chip system or the function module can implement a function of the base-station distributed unit, and the chip system or the function module is, for example, disposed in the base-station distributed unit. The base-station distributed unit is, for example, a functional unit included in a base station. The method includes: receiving a first message from a base-station central unit, where the first message includes first time information, the first time information is for determining time within which an RRC release message is sent to a terminal device, and the RRC release message is for releasing the terminal device from an RRC connected state to an RRC idle state or an RRC inactive state.

For beneficial effects brought by the eighth aspect, refer to the descriptions of the beneficial effects of the seventh aspect.

According to a ninth aspect, a third communication system is provided. The communication system includes a base-station central unit and a base-station distributed unit. The base-station central unit is configured to send a first message to the base-station distributed unit, where the first message includes first time information, the first time information is for determining time within which an RRC release message is sent to a terminal device, and the RRC release message is for releasing the terminal device from an RRC connected state to an RRC idle state or an RRC inactive state. The base-station distributed unit is configured to receive the first message from the base-station central unit.

For beneficial effects brought by the ninth aspect, refer to the descriptions of the beneficial effects of the seventh aspect.

According to a tenth aspect, a communication apparatus is provided. The communication apparatus may be the base-station central unit in any one of the first aspect to the ninth aspect. The communication apparatus has a function of the foregoing base-station central unit. The communication apparatus is, for example, a base-station central unit, or a function module in the base-station central unit, for example, a baseband apparatus or a chip system. In an optional implementation, the communication apparatus includes the baseband apparatus and a radio frequency apparatus. In another optional implementation, the communication apparatus includes a processing unit (which is also referred to as a processing module sometimes) and a transceiver unit (which is also referred to as a transceiver module sometimes). The transceiver unit can implement a sending function and a receiving function. When the transceiver unit implements the sending function, the transceiver unit may be referred to as a sending unit (which is also referred to as a sending module sometimes). When the transceiver unit implements the receiving function, the transceiver unit may be referred to as a receiving unit (which is also referred to as a receiving module sometimes). The sending unit and the receiving unit may be one function module, the function module is referred to as the transceiver unit, and the function module can implement the sending function and the receiving function. Alternatively, the sending unit and the receiving unit may be different function modules, and the transceiver unit is a collective term for the function modules.

In an optional implementation, the communication apparatus further includes a storage unit. The processing unit is configured to be coupled to the storage unit, and execute a program or instructions in the storage unit, to enable the communication apparatus to perform the function of the base-station central unit in any one of the first aspect to the ninth aspect.

According to an eleventh aspect, a communication apparatus is provided. The communication apparatus may be the base-station distributed unit in any one of the first aspect to the ninth aspect. The communication apparatus has a function of the foregoing base-station distributed unit. The communication apparatus is, for example, a base-station distributed unit, or a function module in the base-station distributed unit, for example, a baseband apparatus or a chip system. In an optional implementation, the communication apparatus includes the baseband apparatus and a radio frequency apparatus. In another optional implementation, the communication apparatus includes a processing unit (which is also referred to as a processing module sometimes) and a transceiver unit (which is also referred to as a transceiver module sometimes). The transceiver unit can implement a sending function and a receiving function. When the transceiver unit implements the sending function, the transceiver unit may be referred to as a sending unit (which is also referred to as a sending module sometimes). When the transceiver unit implements the receiving function, the transceiver unit may be referred to as a receiving unit (which is also referred to as a receiving module sometimes). The sending unit and the receiving unit may be one function module, the function module is referred to as the transceiver unit, and the function module can implement the sending function and the receiving function. Alternatively, the sending unit and the receiving unit may be different function modules, and the transceiver unit is a collective term for the function modules.

In an optional implementation, the communication apparatus further includes a storage unit. The processing unit is configured to be coupled to the storage unit, and execute a program or instructions in the storage unit, to enable the communication apparatus to perform the function of the base-station distributed unit in any one of the first aspect to the ninth aspect.

According to a twelfth aspect, a computer-readable storage medium is provided. The computer-readable storage medium is configured to store a computer program or instructions. When the computer program or the instructions are run, the methods performed by the base-station central unit or the base-station distributed unit in the foregoing aspects are enabled to be implemented.

According to a thirteenth aspect, a computer program product including instructions is provided. When the computer program product runs on a computer, the methods in the foregoing aspects are implemented.

According to a fourteenth aspect, an apparatus is provided, and includes one or more units configured to perform the method according to any embodiment of this application.

### BRIEF DESCRIPTION OF DRAWINGS

FIG. 1A is a schematic diagram of a base-station central unit and a base-station distributed unit according to an embodiment of this application;
FIG. 1B is a schematic diagram of a gNB protocol stack;
FIG. 2 is a schematic diagram of a network architecture to which an embodiment of this application is applied;
FIG. 3 is a flowchart of a first communication method according to an embodiment of this application;
FIG. 4 is a flowchart of a first implementation of a first communication method according to an embodiment of this application;
FIG. 5 is a flowchart of a second implementation of a first communication method according to an embodiment of this application;
FIG. 6 is a flowchart of a second communication method according to an embodiment of this application;
FIG. 7 is a flowchart of a third communication method according to an embodiment of this application; and
FIG. 8 is a schematic diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following explains and describes some terms or concepts in embodiments of this application, to facilitate understanding of a person skilled in the art.

In embodiments of this application, a terminal device is a device with a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: cellular communication, device-to-device (device-to-device, D2D) communication, vehicle to everything (vehicle to everything, V2X), machine-to-machine/machine type communication (machine-to-machine/machine type communication, M2M/MTC), an internet of things (internet of things, IoT), virtual reality (virtual reality, VR), augmented reality (augmented reality, AR), industrial control (industrial control), self driving (self driving), telemedicine (telemedicine), a smart grid (smart grid), smart furniture, smart office, a smart wearable, smart transportation, a smart city (smart city), an uncrewed aerial vehicle, and a robot. The terminal device may be sometimes referred to as a user equipment (user equipment, UE), a terminal, an access station, a UE station, a remote station, a wireless communication device, a user apparatus, or the like. For ease of description, in embodiments of this application, the terminal device is described by using the UE as an example.

A network device in embodiments of this application may include, for example, a radio access network device and/or a core network device. The radio access network device is a device with a wireless transceiver function, and is configured to communicate with the terminal device. The radio access network device includes but is not limited to: a base station (BTS, NodeB, eNodeB/eNB, or gNodeB/gNB) in the foregoing communication system, a transmission reception point (transmission reception point, TRP), a base station subsequently evolved in the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support the network using a same access technology, or may support networks using different access technologies. The base station may include one or more co-site or non-co-site transmission reception points. The radio access network device may alternatively be a radio controller, a central unit (central unit, CU), and/or a distributed unit (distributed unit, DU) in a cloud radio access network (cloud radio access network, CRAN) scenario. The radio access network device may alternatively be a server or the like. For example, a network device in a vehicle to everything (vehicle to everything, V2X) technology may be a road side unit (road side unit, RSU). The following describes the radio access network device by using an example in which the radio access network device is the base station. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems using different access technologies may be different. This is not limited in embodiments of this application. A 5G system is used as an example, and the core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be the network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

In embodiments of this application, unless otherwise specified, a quantity of nouns indicates "a singular noun or a plural noun", namely, "one or more". "At least one" means one or more, and "a plurality of" means two or more. The term "and/or" describes an association relationship between associated objects, and represents that three relationships may exist. For example, A and/or B may represent the following three cases: Only A exists, both A and B exist, and only B exists. A and B may be singular or plural. The character "/" generally indicates an "or" relationship between the associated objects. For example, A/B indicates A or B. "At least one of the following" or a similar expression thereof refers to any combination of these items, including a singular item or any combination of plural items. For example, at least one of a, b, or c indicates a, b, c, a and b, a and c, b and c, or a, b, and c, where a, b, and c may be singular or plural.

Ordinal numbers such as "first" and "second" in embodiments of this application are for distinguishing between a plurality of objects, and are not intended to limit sizes, content, an order, a time sequence, priorities, importance degrees, or the like of the plurality of objects. For example, a first message and a second message may be a same message, or may be different messages. In addition, such names do not indicate that the two messages are different in sizes, content, a sending sequence, priorities, importance degrees, or the like either. In addition, numbers of steps in embodiments described in this application are merely intended to distinguish between different steps, but not to limit a sequence of the steps. For example, S301 may occur before S302, or may occur after S302, or may occur simultaneously with S302.

The following briefly describes technical features in embodiments of this application.

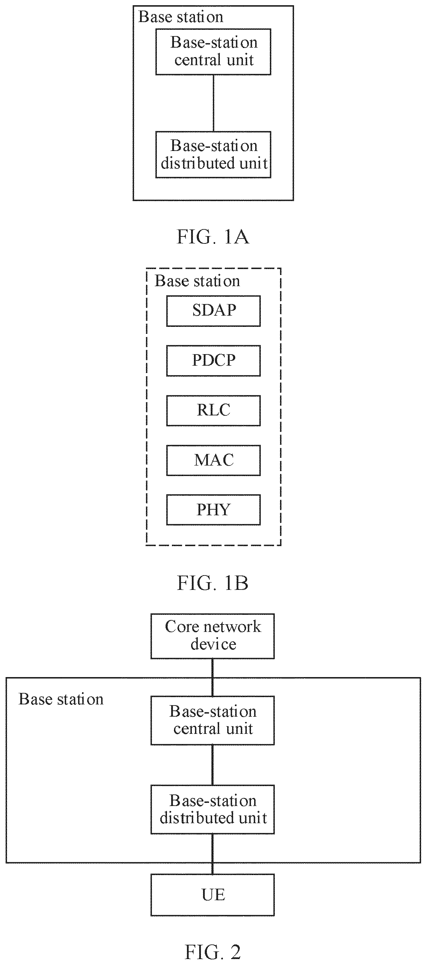

In a 5G NR system, a base station is reconstructed into two logical network elements: a base-station central unit and a base-station distributed unit. For example, FIG. 1A is a schematic diagram of a base-station central unit and a base-station distributed unit. The base-station central unit includes an RRC layer, a service data adaptation protocol (service data adaptation protocol, SDAP) layer, and a packet data convergence protocol (packet data convergence protocol, PDCP) layer in a base-station protocol stack. That is, the base-station central unit has functions of protocol layers such as the RRC layer, the SDAP layer, and the PDCP layer. The base-station distributed unit includes a radio link control (radio link control, RLC) layer, a medium access control (medium access control, MAC) layer, and a physical (physical, PHY) layer in the base-station protocol stack. That is, the base-station distributed unit has functions of protocol layers such as the RLC layer, the MAC layer, and the PHY layer.

The base-station central unit and the base-station distributed unit may be two independent function network elements. Between the two function network elements, there may be an interface for communication between the two function network elements. The interface is, for example, an F1 interface. For example, the base station is a gNB. In this case, the base-station central unit is, for example, a gNB-CU, and the base-station distributed unit is, for example, a gNB-DU. Therefore, such a network architecture is also referred to as a CU-DU split architecture. Alternatively, the base-station central unit may have another name, for example, a central unit or a first unit; and the base-station distributed unit may also have another name, for example, a distributed unit or a second unit. In conclusion, a name does not constitute a limitation on a feature.

The RRC layer is a higher-layer control plane of a UE, and is related to access control, maintenance, and release that are of the UE, configuration of the UE, and the like, so that the RRC layer can parse an RRC message. Main functions of the MAC layer and the PHY layer are low-layer scheduling of the UE, and are related to data packet assembly and data scheduling that are of the UE, and the like, so that the MAC layer can parse control signaling at the MAC layer, and the PHY layer can parse control signaling at the PHY layer. FIG. 1B is a schematic diagram of a gNB protocol stack.

A DRX mechanism in LTE continues to be used in a 5G NR technology, where the DRX mechanism includes a DRX cycle. The UE periodically "wakes up" for a period of time based on the DRX cycle, and may remain in a "sleep" state in remaining time in the DRX cycle, to reduce power consumption. When the UE is in an RRC idle state and an RRC inactive state, if a core network or the base station needs to send downlink data to the UE, the core network or the base station first sends a paging message to the UE to page the UE. After receiving the paging message, the UE initiates an RRC connection setup process, thereby receiving the downlink data. Paging mechanisms may further be specifically classified into core-network paging and access-network paging. For the UE in the RRC idle state, the core-network paging is usually used. For the UE in the RRC inactive state, the access-network paging is usually used.

The UE in the RRC idle state or the RRC inactive state "wakes up" only on a paging occasion (paging occasion, PO) of the UE, to receive the paging message. The UE first receives, on the PO of the UE, downlink control information (downlink control information, DCI) indicating the paging message. The DCImay also be referred to as paging control information, and the paging control information may indicate a time-frequency resource of the paging message. After receiving the paging control information, the UE receives the paging message (paging message). If the paging message indicates a UE ID of the UE, it indicates that the UE is paged, and the UE needs to initiate the RRC connection setup process to access the base station. If the paging message does not indicate a UE ID of the UE, it indicates that the UE is not paged, and the UE may continue to "sleep", and then "wake up" on a next PO; and so on. The paging control information is communicated on a physical downlink control channel (physical downlink control channel, PDCCH), and the paging message is communicated on a physical downlink shared channel (physical downlink shared channel, PDSCH).

The DRX cycle in the paging mechanism is also referred to as a paging cycle. The base station broadcasts a common paging cycle value, referred to as a default paging cycle (default paging cycle), of a cell. In addition, the UE has a UE-specific paging cycle value referred to as a UE-specific paging cycle (UE-specific paging cycle). Currently, it is specified that a paging cycle value actually used by the UE for paging is a smaller value in the default paging cycle and the UE-specific paging cycle. For example, the paging cycle value actually used by the UE is 0.32 second (s), 0.64s, 1.28s, or 2.56s.

If a basic paging mechanism is used, a UE that is not actually paged also needs to monitor the paging control information and receive the paging message on a PO of the UE, and a power waste is caused. Therefore, to further reduce the power consumption of the UE, a UE grouping-based paging mechanism is proposed. To be specific, UEs are divided into a plurality of groups, and the base station may indicate a specific group or specific groups, where a UE in the specific group or UEs in the specific groups are paged. Only the paged UE needs to receive the paging message, and the unpaged UE may not need to monitor the paging message. For example, the base station may indicate a paged UE group in the paging control information, and only the actually paged UE needs to subsequently receive the paging message transmitted on the PDSCH; or the base station may indicate a paged UE group in a WUS (which is also referred to as a PEI), and only the actually paged UE needs to subsequently monitor a corresponding PO, that is, monitor the paging control information and receive the paging message. In time domain, the PEI/the WUS may be located at a location before the PO, where there is an offset (offset) between the location and the PO, and the PEI/the WUS may be the downlink control information.

Currently, there are two grouping manners in the UE grouping-based paging mechanism: ① a grouping manner controlled by the core network; and ② a grouping manner controlled by a radio access network (radio access network, RAN), also referred to as a grouping manner that is based on the UE ID.

The grouping manner controlled by the core network may be understood as that the core network controls a group to which the UE belongs. For example, the core network allocates, to the UE depending on whether the UE supports a grouping manner and based on a feature of the UE (for example, a paging probability of the UE and whether the UE has a requirement on low power consumption), a number of the group to which the UE belongs, and the core network sends, to a radio access network while paging the UE, the number of the group to which the UE belongs. In this case, the radio access network sends the WUS/the PEI and the corresponding paging message based on the number of the group to which the UE belongs. For example, when sending the WUS/the PEI, the radio access network indicates the number of the group to which the UE belongs, so that the UE can be paged.

The grouping manner controlled by the radio access network may be understood as that the radio access network controls grouping of the UEs, and the core network is unaware of the grouping. For example, the radio access network broadcasts a group quantity supported by the cell, the radio access network and the UE calculate, according to a same calculation formula (where the formula may be predefined by using a protocol, for example, the formula is for using a manner such as performing a modulo operation on the UE ID and/or the group quantity supported by the cell) and based on the group quantity, the UE ID, and the like, a number of a group to which the UE belongs, and the radio access network sends the WUS/the PEI and the corresponding paging message based on the number of the group to which the UE belongs.

The two grouping manners are applicable to both the core-network paging and the access-network paging. It should be noted that, the grouping manner controlled by the core network considers the feature of the UE (where for example, UEs with low paging probabilities are grouped together, and UEs with high paging probabilities are grouped together, so that paging on the UE with the high paging probability does not affect the UE with the low paging probability), and the grouping manner controlled by the radio access network is a pure randomization process. It can be learned that, the grouping manner controlled by the core network has a better grouping effect than the grouping manner controlled by the radio access network, and can better reduce a probability that the UE is falsely alarm (false alarm). Therefore, the grouping manner controlled by the core network is usually used preferably in a paging process.

From a perspective of the radio access network, a cell may not support any grouping manner, or may support either of the grouping manners or both of the two grouping manners. This depends on capabilities of the radio access network and the core network. From a perspective of the UE, a cell may not use a grouping manner, or may use a grouping manner but can use only either of the grouping manners simultaneously. This depends on the grouping manner supported by the cell and a capability of the UE.

If a base station in the radio access network needs to page a UE, the base station may determine whether the UE can be paged in a grouping manner. If the UE can be paged in the grouping manner, the base station may send the PEI/the WUS, and indicate, in the PEI/the WUS, a group number of a group to which the UE belongs, to page the UE. The group number, indicated in the PEI/the WUS, of the group to which the UE belongs is obtained by grouping the UE based on a grouping manner supported by the UE.

In the CU-DU split architecture, the gNB-DU is responsible for sending the PEI/the WUS. However, the gNB-DU does not know information about the UE. For example, the gNB-DU knows neither whether the UE supports a grouping manner nor which grouping manner is supported by the UE. Therefore, the gNB-DU may not be able to page the UE.

In view of this, the technical solutions in embodiments of this application are provided. In embodiments of this application, a base-station central unit may send a first message to a base-station distributed unit, where the first message may indicate whether a to-be-paged UE supports a first grouping manner, and/or the first message may be for determining a paging manner for the to-be-paged UE. In this way, the base-station distributed unit can determine, based on the first message, whether the to-be-paged UE supports a grouping manner or a grouping manner that can be supported by the to-be-paged UE, thereby paging the UE in the corresponding paging manner (for example, a grouping paging manner or a non-grouping paging manner). In this way, in a CU-DU split architecture, the base-station distributed unit can also complete paging on the UE.

FIG. 2 is a schematic diagram of a network architecture to which an embodiment of this application is applied. FIG. 2 includes a core network device, a radio access network device, and a UE. The radio access network device is in a CU-DU split architecture. If the UE is in an RRC idle state, the core network device may page the UE; or if the UE is in an RRC inactive state, the radio access network device may page the UE, where a base-station distributed unit in the radio access network device pages the UE.

The core network device in FIG. 2 is, for example, an AMF, or may be another device in a core network. The radio access network device in FIG. 2 is, for example, a base station. The radio access network device corresponds to different devices in different systems. For example, the radio access network device may correspond to an eNB in a 4G system, and corresponds to a radio access network device, for example, a gNB, in 5G in a 5G system. Certainly, the technical solutions provided in embodiments of this application may alternatively be applied to a future mobile communication system. Therefore, the radio access network device in FIG. 2 may alternatively correspond to a network device in the future mobile communication system. In embodiments of this application, that the radio access network device is the base station is used as an example. Actually, with reference to the foregoing descriptions, the radio access network device may alternatively be a device such as an RSU.

With reference to the accompanying drawings, the following describes methods provided in embodiments of this application. In the accompanying drawings corresponding to embodiments of this application, all optional steps are indicated by dashed lines. The "base-station central unit" in embodiments of this application is, for example, a gNB-CU, or may be a corresponding logical network element in another division manner if the base station is divided into logical network elements in the manner. The "base-station distributed unit" in embodiments of this application is, for example, a gNB-DU, or may be a corresponding logical network element in the another division manner if the base station is divided into the logical network elements in the manner. For ease of understanding, the gNB-CU and the gNB-DU are used as an example in the following description process.

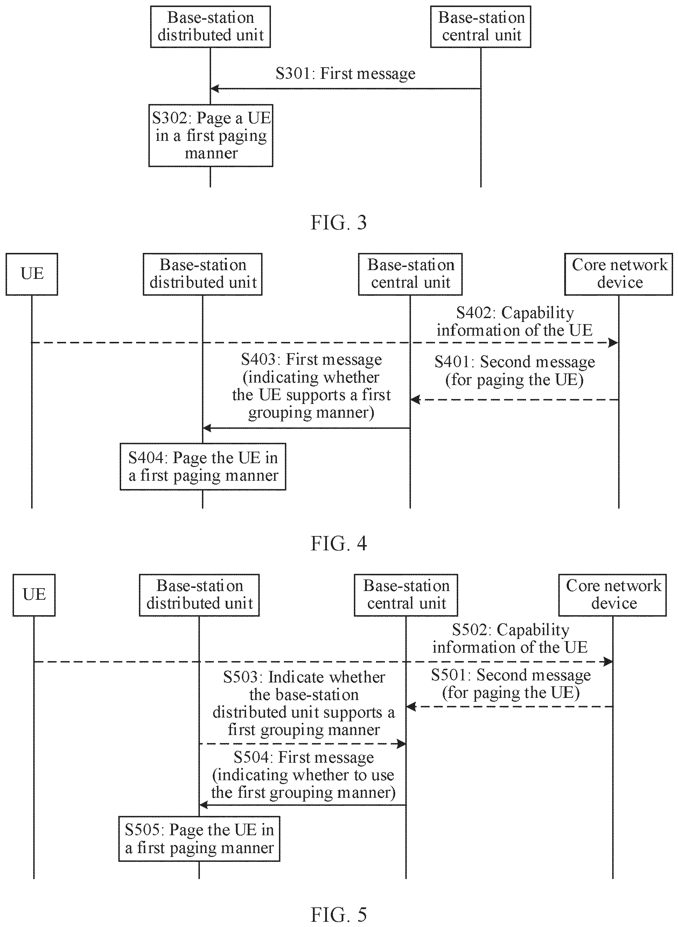

An embodiment of this application provides a first communication method. FIG. 3 is a flowchart of the method. The method may be applied to the network architecture shown in FIG. 2. For example, a UE in the method is the UE in FIG. 2, a gNB-CU in the method is a base-station central unit in FIG. 2, a gNB-DU in the method is the base-station distributed unit in FIG. 2, and a core network device in the method is the core network device in FIG. 2.

S301: The gNB-CU sends a first message to the gNB-DU. Accordingly, the gNB-DU receives the first message from the gNB-CU. The first message may be for determining whether a to-be-paged UE supports a first grouping manner, and/or the first message may be for determining a paging manner for the to-be-paged UE.

The first message is, for example, a paging message between the gNB-CU and the gNB-DU, or may be a message of another type.

The paging manner for the to-be-paged UE is, for example, performing paging based on a grouping manner or performing paging based on a non-grouping manner. The grouping manner further includes the first grouping manner and a second grouping manner. Therefore, the paging manner for the to-be-paged UE may alternatively be performing paging based on the first grouping manner, performing paging based on the second grouping manner, or performing paging based on the non-grouping manner. The first grouping manner is, for example, a grouping manner controlled by a radio access network, or in other words, a grouping manner that is based on a UE ID. The second grouping manner is, for example, a grouping manner controlled by a core network, or in other words, a grouping manner that is based on an identifier allocated by the core network device. In other words, the gNB-DU can determine, based on the first message, which paging manner on earth is for the to-be-paged UE, so that the UE can be paged. In this way, the UE can also be normally paged in a CU-DU split architecture.

S302: The gNB-DU pages the UE in a first paging manner.

The gNB-DU may determine the first paging manner based on the first message. The first paging manner is, for example, performing paging based on the grouping manner or performing paging based on the non-grouping manner. The grouping manner further includes the first grouping manner or the second grouping manner. Therefore, the first paging manner may alternatively be performing paging based on the first grouping manner, performing paging based on the second grouping manner, or performing paging based on the non-grouping manner. In other words, the gNB-DU may determine, based on the first message, which grouping manner on earth is for paging the UE or that the non-grouping manner is for paging the UE. In S302, the gNB-DU may generate first information, and send the first information, thereby paging the UE. For example, if the first paging manner is performing paging based on the grouping manner, the first information may include a group identifier, where the group identifier is determined based on the grouping manner, in other words, is determined based on the first paging manner, or is determined based on the first message essentially. If the grouping manner is the first grouping manner, the group identifier may be an identifier of a group to which the paged UE belongs in the first grouping manner. If the grouping manner is the second grouping manner, the group identifier may be an identifier of a group to which the paged UE belongs in the second grouping manner. Alternatively, if the first paging manner is performing paging based on the non-grouping manner, the first information may not include a group identifier. In this case, the first information does not include the group identifier, and the group identifier may alternatively be considered as being determined based on the non-grouping manner, in other words, being determined based on the first paging manner, or being determined based on the first message essentially. Alternatively, if the first paging manner is performing paging based on the non-grouping manner, the gNB-DU may not send the first information.

For example, if the first paging manner is performing paging based on the first grouping manner, the first information may include the group identifier determined based on the first grouping manner, and the first information is, for example, a PEI/a WUS or paging control information; if the first paging manner is performing paging based on the second grouping manner, the first information may include the group identifier determined based on the second grouping manner, and the first information is, for example, a PEI/a WUS or paging control information; or if the first paging manner is performing paging based on the non-grouping manner, the first information may not include the group identifier, and the first information is, for example, paging control information. If the first paging manner is performing paging based on the non-grouping manner, it indicates that the gNB-DU does not page the UE in the grouping manner. In this case, the gNB-DU may not send a PEI/a WUS. Optionally, the gNB-DU may send the paging control information, and the paging control information does not include the group identifier. The group identifier is, for example, a group number, or another identifier indicating a group. If the first information includes the group identifier, that the first information is for paging the UE may be considered as that the first information indicates the UE corresponding to the group identifier to receive the paging message.

For example, if the first paging manner is performing paging based on the first grouping manner, the gNB-DU may page the UE in the first grouping manner. For example, the gNB-DU may send the PEI/the WUS, where the PEI/the WUS may indicate the group identifier of the group to which the UE belongs in the first grouping manner. If the UE receives the PEI/the WUS, and determines that the group identifier indicated by the PEI/the WUS is the identifier of the group to which the UE belongs, the UE may further receive the paging message (or the UE may further monitor the paging control information and the paging message). If the paging message includes the ID of the UE, it indicates that the UE is paged; or if the paging message does not include the ID of the UE, it indicates that the UE is not paged. Alternatively, if the first paging manner is performing paging based on the first grouping manner, the gNB-DU may send the paging control information, where the paging control information may indicate the group identifier of the group to which the UE belongs in the first grouping manner. If the UE receives the paging control information, and determines that the group identifier indicated by the paging control information is the identifier of the group to which the UE belongs, the UE may further receive the paging message. If the paging message includes the ID of the UE, it indicates that the UE is paged; or if the paging message does not include the ID of the UE, it indicates that the UE is not paged. If the UE determines that the UE is paged, the UE may initiate an RRC connection setup process to the gNB-DU; or if the UE determines that the UE is not paged, the UE may continue to sleep, and then determine, when a next PO arrives, whether the UE needs to wake up.

For another example, if the first paging manner is performing paging based on the second grouping manner, the gNB-DU may page the UE in the second grouping manner. For example, the gNB-DU may send the PEI/the WUS, where the PEI/the WUS may indicate the group identifier of the group to which the UE belongs in the second grouping manner. If the UE receives the PEI/the WUS, and determines that the group identifier indicated by the PEI/the WUS is the identifier of the group to which the UE belongs, the UE may further receive the paging message (or the UE may further monitor the paging control information and the paging message). If the paging message includes the ID of the UE, it indicates that the UE is paged; or if the paging message does not include the ID of the UE, it indicates that the UE is not paged. Alternatively, if the first paging manner is performing paging based on the second grouping manner, the gNB-DU may send the paging control information, where the paging control information may indicate the group identifier of the group to which the UE belongs in the second grouping manner. If the UE receives the paging control information, and determines that the group identifier indicated by the paging control information is the identifier of the group to which the UE belongs, the UE may further receive the paging message. If the paging message includes the ID of the UE, it indicates that the UE is paged; or if the paging message does not include the ID of the UE, it indicates that the UE is not paged. If the UE determines that the UE is paged, the UE may initiate an RRC connection setup process to the gNB-DU; or if the UE determines that the UE is not paged, the UE may continue to sleep, and then determine, when a next PO arrives, whether the UE needs to wake up.

For still another example, if the first paging manner is performing paging based on the non-grouping manner, the gNB-DU may page the UE in the non-grouping manner. For example, the gNB-DU may not send the PEI/the WUS, and the gNB-DU sends the paging control information, where the paging control information does not indicate the group identifier. The UE receives the paging control information, and may further receive the paging message. If the paging message includes the ID of the UE, it indicates that the UE is paged; or if the paging message does not include the ID of the UE, it indicates that the UE is not paged. If the UE determines that the UE is paged, the UE may initiate an RRC connection setup process to the gNB-DU; or if the UE determines that the UE is not paged, the UE may continue to sleep, and then determine, when a next PO arrives, whether the UE needs to wake up.

It can be learned that the gNB-DU can page the UE according to the technical solution in this embodiment of this application. For ease of understanding, the following further describes, by using two embodiments, the solution provided in the embodiment shown in FIG. 3. This is equivalent to that the following two embodiments may be understood as two examples of the solution provided in the embodiment shown in FIG. 3.

The following describes a first example of the solution provided in the embodiment shown in FIG. 3, or in other words, a first optional implementation of the solution provided in the embodiment shown in FIG. 3. FIG. 4 is a flowchart of the implementation. In this implementation, a core-network paging process is used as an example.

S401: A core network device sends a second message to a gNB-CU. Accordingly, the gNB-CU receives the second message from the core network device. The second message is, for example, a core-network paging message, or may be a message of another type.

When a core network needs to page a UE, the core network may send the second message to the gNB-CU. The second message may include "paging-related UE air interface capability" information, and the "paging-related UE air interface capability" information is air interface capability information of the paged UE. For example, the "paging-related UE air interface capability" information includes "information indicating whether the UE supports a first grouping manner", and the information indicates that the paged UE supports the first grouping manner or does not support the first grouping manner. Optionally, the "paging-related UE air interface capability" information may further include air interface configuration capability information of a PEI/a WUS, for example, a minimum time interval from a location of the PEI/the WUS to a location of a PO. Optionally, the second message may further include a first group identifier. The first group identifier is an identifier of a group to which the paged UE belongs in a second grouping manner, and the first group identifier may also be referred to as "an identifier of a group to which the UE belongs in a grouping manner controlled by the core network". If the second message includes the first group identifier, it may alternatively be considered as implicitly indicating that the paged UE supports the second grouping manner. In addition, if the second message is the core-network paging message, the second message may further include an identifier of the paged UE. The identifier of the UE is, for example, an ID of the UE. The ID of the UE is, for example, a 5G S-temporary mobile subscription identifier (5G S-temporary mobile subscription identifier, 5G-S-TMSI) of the UE.

Optionally, before S401, S402 may be further included: The UE sends capability information of the UE. Accordingly, a radio access network device receives the capability information of the UE from the UE. The UE is the paged UE. The radio access network device is, for example, a RAN, a gNB, or a gNB-CU. In this embodiment of this application, that the radio access network device is the gNB-CU is used as an example. The capability information sent by the UE is, for example, referred to as first capability information, and the first capability information may include the foregoing "paging-related UE air interface capability" information. Then, the gNB-CU sends the first capability information or the "paging-related UE air interface capability" information to the core network device, and the core network device stores the information. When the core network device needs to page a UE, the core network device may send "paging-related UE air interface capability" information from the UE to the gNB-CU via the second message.

S403: The gNB-CU sends a first message to a gNB-DU. Accordingly, the gNB-DU receives the first message from the gNB-CU.

Optionally, the first message may include the capability information of the paged UE. The capability information is, for example, referred to as second capability information. The second capability information may indicate that the UE supports the first grouping manner, or indicate that the UE does not support the first grouping manner. The second capability information is, for example, the "information indicating whether the UE supports a first grouping manner". In this case, the gNB-DU may determine, based on the first message, whether the UE supports the first grouping manner. For example, the second capability information included in the first message is the "paging-related UE air interface capability" information, and the "paging-related UE air interface capability" information includes the "information indicating whether the UE supports a first grouping manner". In this case, the gNB-CU does not need to parse the "paging-related UE air interface capability" information included in the second message. For example, the "paging-related UE air interface capability" information is included in a container (container) of the second message. The container is, for example, referred to as a terminal-device radio paging information container, and the terminal-device radio paging information container includes paging-related radio capability information of a terminal device. The gNB-CU does not need to parse the container, but directly extracts the container from the second message, and carries the container in the first message. After receiving the first message, the gNB-DU can obtain the "information indicating whether the UE supports a first grouping manner" by parsing the "paging-related UE air interface capability" information carried in the container. Alternatively, the second capability information included in the first message is the "information indicating whether the UE supports a first grouping manner", and the first message may not include other information included in the "paging-related UE air interface capability" information, to reduce signaling overheads. In this case, the gNB-CU needs to parse a terminal-device radio paging information container included in the second message, obtains the "information indicating whether the UE supports a first grouping manner" from the "paging-related UE air interface capability" information carried in the container, and carries the "information indicating whether the UE supports a first grouping manner" in the first message. Compared with the manner in which the first message includes the terminal-device radio paging information container, the manner in which the first message includes only the "information indicating whether the UE supports a first grouping manner" can avoid sending of redundant information, and reduce the signaling overheads.

Optionally, the first message may further include the air interface configuration capability information of the PEI/the WUS, and/or include the first group identifier. If the first message is a paging message between the gNB-CU and the gNB-DU, the first message may further include the identifier of the paged UE, for example, the 5G-S-TMSI of the UE.

After the gNB-CU receives the second message, the gNB-CU may send the first message to the gNB-DU, and the gNB-DU may page the UE based on the first message. In other words, content of the first message may be determined based on the second message. Alternatively, the gNB-CU may determine content of the first message in another manner without using the second message. Therefore, S401 is an optional step.

That the gNB-CU determines the first message based on the second message is used as an example. When content of the second message is different, the content of the first message may also be different. The following uses an example for description.
1. The second message includes the "paging-related UE air interface capability" information and the first group identifier.

In an optional implementation, regardless of whether the gNB-DU supports the first grouping manner and/or the second grouping manner, the first message may include the "information indicating whether the UE supports a first grouping manner" and the first group identifier. In other words, a capability of the gNB-DU is not considered, but the content of the second message is sent to the gNB-DU. This manner is simple for the gNB-CU. In embodiments of this application, that the gNB-DU supports a grouping manner may be understood as that the gNB-DU supports the grouping manner, or may be understood as that a part or all of cells served by the gNB-DU (or in other words, one or more cells served by the gNB-DU) support the grouping manner. In addition, that the gNB-DU does not support a grouping manner may be understood as that the gNB-DU does not support the grouping manner, or may be understood as that a part or all of cells served by the gNB-DU (or in other words, one or more cells served by the gNB-DU) do not support the grouping manner. For example, that the gNB-DU supports the first grouping manner may be understood as that the gNB-DU supports the first grouping manner, or may be understood as that the part or all of the cells served by the gNB-DU support the first grouping manner. If a supporting status of the gNB-DU for a grouping manner is a supporting status of a cell served by the gNB-DU for the grouping manner, it may be considered that determining is separately performed based on each cell. If the supporting status of the gNB-DU for the grouping manner is the supporting status of the cell served by the gNB-DU for the grouping manner, this implementation may be replaced with: For the cell of the gNB-DU, regardless of whether the cell supports the first grouping manner and/or the second grouping manner, the first message may include the "information indicating whether the UE supports a first grouping manner" and the first group identifier. Naturally, the first message is also a message specific to the cell. In this case, first messages may be separately sent for different cells.

In another optional implementation, a supporting status of the gNB-DU for the second grouping manner may be considered. If the gNB-DU supports the second grouping manner, the first message may include the first group identifier (where in embodiments of this application, because a prerequisite for that the first message includes the first group identifier is that both the core network device and the UE support the first grouping manner, the core network device has grouped UEs based on the first grouping manner, and the group identifier of the group to which the to-be-paged UE belongs is the first group identifier), but may not include the "paging-related UE air interface capability" information because if the gNB-DU supports the second grouping manner, the gNB-DU may perform paging in the second grouping manner, and whether the first grouping manner is supported does not need to be considered. In addition, if the gNB-DU does not support the second grouping manner, the first message may include the "information indicating whether the UE supports a first grouping manner", but may not include the first group identifier. In other words, if the gNB-DU does not support the second grouping manner, paging cannot be performed in the second grouping manner. In this case, the gNB-DU may further determine, based on the "information indicating whether the UE supports a first grouping manner", whether to perform paging in the first grouping manner, to improve a paging success rate; and perform paging in a grouping manner as much as possible, to reduce power consumption of the UE. Alternatively, if a supporting status of the gNB-DU for a grouping manner is a supporting status of a cell served by the gNB-DU for the grouping manner, this implementation may be replaced with: If the cell served by the gNB-DU supports the second grouping manner, the first message specific to the cell may include the first group identifier, but may not include the "paging-related UE air interface capability" information. In addition, if the cell served by the gNB-DU does not support the second grouping manner, the first message specific to the cell may include the "information indicating whether the UE supports a first grouping manner", but may not include the first group identifier.

In still another optional implementation, in addition to a supporting status of the gNB-DU for the second grouping manner, a supporting status of the gNB-DU for the first grouping manner may be considered. If the gNB-DU supports the second grouping manner, the first message may include the first group identifier, but not include the "information indicating whether the UE supports a first grouping manner". If the gNB-DU does not support the second grouping manner but supports the first grouping manner, the first message includes the "information indicating whether the UE supports a first grouping manner", but does not include the first group identifier. If the gNB-DU does not support the second grouping manner, paging cannot be performed in the second grouping manner. However, the gNB-DU supports the first grouping manner. Therefore, the "information indicating whether the UE supports a first grouping manner" may be sent to the gNB-DU, so that the gNB-DU can determine, based on the "information indicating whether the UE supports a first grouping manner", whether to page the UE in the first grouping manner, to improve a paging success rate; and perform paging in a grouping manner as much as possible, to reduce power consumption of the UE. In addition, if the gNB-DU supports neither the second grouping manner nor the first grouping manner, the first message may include neither the "information indicating whether the UE supports a first grouping manner" nor the first group identifier. In this case, the gNB-DU does not need to determine whether to page the UE in the first grouping manner. Therefore, the "information indicating whether the UE supports a first grouping manner" may not need to be sent to the gNB-DU. The gNB-CU predetermines a capability of the gNB-DU, so that invalid information sent to the gNB-DU can be reduced, and signaling overheads can be reduced. Alternatively, if a supporting status of the gNB-DU for a grouping manner is a supporting status of a cell served by the gNB-DU for the grouping manner, this implementation may be replaced with: If the cell served by the gNB-DU supports the second grouping manner, the first message specific to the cell may include the first group identifier, but not include the "information indicating whether the UE supports a first grouping manner". If the cell served by the gNB-DU does not support the second grouping manner but supports the first grouping manner, the first message specific to the cell includes the "information indicating whether the UE supports a first grouping manner", but does not include the first group identifier. In addition, if the cell served by the gNB-DU supports neither the second grouping manner nor the first grouping manner, the first message specific to the cell may include neither the "information indicating whether the UE supports a first grouping manner" nor the first group identifier.

There may be a plurality of cells served by the gNB-DU. All cells may support the second grouping manner, none of the cells support the second grouping manner, or a part of the cells support the second grouping manner and a remaining cell does not support the second grouping manner. All the cells may support the first grouping manner, none of the cells support the first grouping manner, or a part of the cells support the first grouping manner and a remaining cell does not support the first grouping manner. A cell may support both the first grouping manner and the second grouping manner (where this may alternatively be considered as that the cell supports a grouping manner), support the first grouping manner or the second grouping manner, or support neither of the two grouping manners (where this may alternatively be considered as that the cell does not support the grouping manner). In conclusion, regardless of a specific case, if the cell is considered, the content of the first message is separately determined for each cell.

2. The second message includes the "paging-related UE air interface capability" information, but does not include the first group identifier. In this case, that the gNB-DU performs paging in the second grouping manner may not need to be considered. In other words, the gNB-DU cannot perform paging in the second grouping manner.

In an optional implementation, a supporting status of the gNB-DU for a grouping manner is not considered. Regardless of whether the gNB-DU supports the first grouping manner and/or the second grouping manner, the first message may include the "information indicating whether the UE supports a first grouping manner". That is, regardless of whether the gNB-DU supports the first grouping manner, the "information indicating whether the UE supports a first grouping manner" is sent to the gNB-DU, so that the gNB-DU determines, based on the "information indicating whether the UE supports a first grouping manner", whether to page the UE in the first grouping manner. Alternatively, if a supporting status of the gNB-DU for a grouping manner is a supporting status of a cell served by the gNB-DU for the grouping manner, this implementation may be replaced with: Regardless of whether the cell served by the gNB-DU supports the first grouping manner and/or the second grouping manner, the first message specific to the cell may include the "information indicating whether the UE supports a first grouping manner".

In another optional implementation, a supporting status of the gNB-DU for the first grouping manner may be considered. If the gNB-DU supports the first grouping manner, the first message may include the "information indicating whether the UE supports a first grouping manner"; or if the gNB-DU does not support the first grouping manner, the first message may not include the "information indicating whether the UE supports a first grouping manner". In other words, if the gNB-DU supports the first grouping manner, the "information indicating whether the UE supports a first grouping manner" may be sent to the gNB-DU, so that the gNB-DU determines, based on the "information indicating whether the UE supports a first grouping manner", whether to page the UE in the first grouping manner. In addition, if the gNB-DU does not support the first grouping manner, the gNB-DU cannot page the UE in the first grouping manner. In this case, the "information indicating whether the UE supports a first grouping manner" may not need to be sent to the gNB-DU, to reduce signaling overheads, and avoid sending of invalid information. Alternatively, if a supporting status of the gNB-DU for a grouping manner is a supporting status of a cell served by the gNB-DU for the grouping manner, this implementation may be replaced with: If the cell served by the gNB-DU supports the first grouping manner, the first message specific to the cell may include the "information indicating whether the UE supports a first grouping manner"; or if the cell served by the gNB-DU does not support the first grouping manner, the first message specific to the cell may not include the "information indicating whether the UE supports a first grouping manner".

It should be noted that, if the supporting status of the gNB-DU for the second grouping manner, the supporting status of the gNB-DU for the second grouping manner and the first grouping manner, or the supporting status of the gNB-DU for the first grouping manner is considered, the gNB-CU needs to know whether the gNB-DU supports the first grouping manner. For example, the gNB-CU may determine whether the gNB-DU supports the first grouping manner, and may notify the gNB-DU of a determining result; or the gNB-DU may determine whether the gNB-DU supports the first grouping manner, and notify the gNB-CU of a determining result.

As described above, the first message may include the second capability information, and the second capability information includes the "paging-related UE air interface capability" information or the "information indicating whether the UE supports a first grouping manner". For example, a first field may be for carrying the second capability information. If the second capability information includes the "paging-related UE air interface capability" information, the first field may be the terminal-device radio paging information container carrying the "paging-related UE air interface capability" information; or if the second capability information includes the "information indicating whether the UE supports a first grouping manner", the first field may be a newly defined field in the first message, or may be an existing field in the first message. Optionally, the first message may indicate, depending on whether the first message carries the first field, whether the UE supports the first grouping manner. If the first message carries the first field, the first message indicates that the UE supports the first grouping manner; or if the first message does not carry the first field, the first message indicates that the UE does not support the first grouping manner. Alternatively, the first message indicates, by using a value of the first field, whether the UE supports the first grouping manner. If the value of the first field is a first value, the first message indicates that the UE supports the first grouping manner; or if the value of the first field is a second value (or in other words, the value of the first field is not a first value), the first message indicates that the UE does not support the first grouping manner. The first value is, for example, "1", and the second value is, for example, "0"; the first value is, for example, true (true), and the second value is, for example, false (false); the first value is, for example, supported (supported), and the second value is, for example, not supported (not supported); or the first value is, for example, enable (enable), and the second value is, for example, not enable (not enable).

S403 and S301 in the embodiment shown in FIG. 3 may be a same step. Therefore, for more content (for example, descriptions of the first message) of S403, refer to S301.

S404: The gNB-DU pages the UE in a first paging manner.

If the content included in the first message is different, the first paging manner is accordingly different. The following uses an example for description.
A. The first message includes the "information indicating whether the UE supports a first grouping manner" and the first group identifier.

In a first optional implementation, if the gNB-DU supports the second grouping manner, the first paging manner may be performing paging based on the second grouping manner. For example, the gNB-DU generates first information. The first information is, for example, the PEI/the WUS. The PEI/the WUS includes information indicating "the identifier of the group to which the UE belongs in the second grouping manner". For example, the information is the first group identifier, or the information is a bit that corresponds to the group to which the UE belongs and that is in a bitmap (bitmap) indicating the group identifier in the PEI/the WUS, where the bit is set to the first value, and the first value is, for example, " 1", true (true), or supported (supported). For another example, the gNB-DU generates first information. The first information is, for example, paging control information. The paging control information includes information indicating "the identifier of the group to which the UE belongs in the second grouping manner". For example, the information is the first group identifier, or the information is a bit that corresponds to the group to which the UE belongs and that is in a bitmap indicating the group identifier in the paging control information, where the bit is set to the first value, and the first value is, for example, "1", true (true), or supported (supported).

Alternatively, if the supporting status of the gNB-DU for the grouping manner is the supporting status of the cell served by the gNB-DU for the grouping manner, the first optional implementation may be replaced with: If the cell served by the gNB-DU supports the second grouping manner, the first paging manner used in the cell may be performing paging based on the second grouping manner. In this case, for example, first information generated by the gNB-DU may be sent in the cell.

In addition, if the gNB-DU supports the second grouping manner, the first message may alternatively include only the first group identifier, but may not include the "information indicating whether the UE supports a first grouping manner". Alternatively, if the cell served by the gNB-DU supports the second grouping manner, the first message specific to the cell may include only the first group identifier, but may not include the "information indicating whether the UE supports a first grouping manner". That is, a prerequisite for the first optional implementation may be that the first message includes the "information indicating whether the UE supports a first grouping manner" and the first group identifier, or may be that the first message includes the first group identifier but does not include the "information indicating whether the UE supports a first grouping manner". Because that the first message includes the first group identifier may be considered as implicitly indicating that the paged UE supports the second grouping manner, and the gNB-DU or the cell served by the gNB-DU also supports the second grouping manner, the gNB-DU may determine to use the second grouping manner, and does not need to determine whether to use the first grouping manner. Therefore, the first message may include the "information indicating whether the UE supports a first grouping manner", or may not include the information.

In a second optional implementation, if the gNB-DU does not support the second grouping manner but supports the first grouping manner, and the "information indicating whether the UE supports a first grouping manner" included in the first message indicates that the UE supports the first grouping manner, the first paging manner may be performing paging based on the first grouping manner. For example, the gNB-DU groups the UEs based on the first grouping manner, and generates first information. The first information is, for example, the PEI/the WUS. The PEI/the WUS includes information indicating "the identifier of the group to which the UE belongs in the first grouping manner". For example, the information is a second group identifier, or the information is a bit that corresponds to the group to which the UE belongs and that is in a bitmap indicating the group identifier in the PEI/the WUS, where the bit is set to the first value, and the first value is, for example, "1", true, or supported. Alternatively, the first information is paging control information. The paging control information includes information indicating "the identifier of the group to which the UE belongs in the first grouping manner". For example, the information is a second group identifier, or the information is a bit that corresponds to the group to which the UE belongs and that is in a bitmap indicating the group identifier in the paging control information, where the bit is set to the first value, and the first value is, for example, "1", true, or supported. The second group identifier is the identifier of the group to which the UE belongs after the gNB-DU groups the UE based on the first grouping manner.

Alternatively, if the supporting status of the gNB-DU for the grouping manner is the supporting status of the cell served by the gNB-DU for the grouping manner, the second optional implementation may be replaced with: If the cell served by the gNB-DU does not support the second grouping manner but supports the first grouping manner, and the "information indicating whether the UE supports a first grouping manner" included in the first message specific to the cell indicates that the UE supports the first grouping manner, the first paging manner used in the cell may be performing paging based on the first grouping manner. In this case, for example, first information generated by the gNB-DU may be sent in the cell.

In a third optional implementation, if the gNB-DU does not support the second grouping manner but supports the first grouping manner, and the "information indicating whether the UE supports a first grouping manner" included in the first message indicates that the UE does not support the first grouping manner, the first paging manner may be performing paging based on a non-grouping manner. For example, if the gNB-DU does not page the UE in a grouping manner, the gNB-DU does not need to generate first information, for example, does not send the PEI/the WUS. Alternatively, the gNB-DU generates first information, where the first information is, for example, paging control information, and the paging control information does not include a group identifier.

Alternatively, if the supporting status of the gNB-DU for the grouping manner is the supporting status of the cell served by the gNB-DU for the grouping manner, the third optional implementation may be replaced with: If the cell served by the gNB-DU does not support the second grouping manner but supports the first grouping manner, and the "information indicating whether the UE supports a first grouping manner" included in the first message specific to the cell indicates that the UE does not support the first grouping manner, the first paging manner used in the cell may be performing paging based on a non-grouping manner. For example, in this case, first information generated by the gNB-DU may be sent in the cell.

In a fourth optional implementation, if the gNB-DU supports neither the second grouping manner nor the first grouping manner (or in other words, the gNB-DU does not support a grouping manner), the first paging manner may be performing paging based on a non-grouping manner. For example, if the gNB-DU does not page the UE in the grouping manner, the gNB-DU does not need to generate first information, for example, does not send the PEI/the WUS. Alternatively, the gNB-DU generates first information, where the first information is, for example, paging control information, and the paging control information does not include a group identifier.

Alternatively, if the supporting status of the gNB-DU for the grouping manner is the supporting status of the cell served by the gNB-DU for the grouping manner, the fourth optional implementation may be replaced with: If the cell served by the gNB-DU supports neither the second grouping manner nor the first grouping manner (or in other words, the cell does not support the grouping manner), the first paging manner used in the cell may be performing paging based on a non-grouping manner. For example, in this case, if the gNB-DU generates first information, the first information is sent in the cell.

In addition, if the gNB-DU does not support the grouping manner, the content included in the first message may not need to be limited. Alternatively, if the cell served by the gNB-DU does not support the grouping manner, the content included in the first message may not need to be limited. That is, a prerequisite for the fourth optional implementation may be that the first message includes the "information indicating whether the UE supports a first grouping manner" and the first group identifier, or the content included in the first message may not be limited. That the content included in the first message is not limited means, for example, for the two pieces of information: the "information indicating whether the UE supports a first grouping manner" and the first group identifier, the first message may include both, either, or neither thereof. Because the gNB-DU or the cell served by the gNB-DU does not support the grouping manner, the gNB-DU can page the UE only in the non-grouping manner, that is, does not page the UE in the grouping manner. Therefore, the content included in the first message does not need to be limited. In other words, the gNB-DU may not need to perform determining based on the content included in the first message, but may perform paging in the non-grouping manner directly, that is, does not page the UE in the grouping manner.

B. The first message includes the "information indicating whether the UE supports a first grouping manner", but does not include the first group identifier. In this case, that the gNB-DU performs paging in the second grouping manner may not need to be considered. In other words, the gNB-DU cannot perform paging in the second grouping manner.

In a fifth optional implementation, if the gNB-DU supports the first grouping manner, and the "information indicating whether the UE supports a first grouping manner" included in the first message indicates that the UE supports the first grouping manner, the first paging manner is, for example, performing paging based on the first grouping manner. For example, the gNB-DU generates first information. The first information is, for example, the PEI/the WUS. The PEI/the WUS may include information indicating "the identifier of the group to which the UE belongs in the first grouping manner". The information is, for example, a second group identifier, or the information is a bit that corresponds to the group to which the UE belongs and that is in a bitmap indicating the group identifier in the PEI/the WUS, where the bit is set to the first value, and the first value is, for example, "1", true, or supported. Alternatively, the first information is paging control information. The paging control information includes information indicating "the identifier of the group to which the UE belongs in the first grouping manner". For example, the information is a second group identifier, or the information is a bit that corresponds to the group to which the UE belongs and that is in a bitmap indicating the group identifier in the paging control information, where the bit is set to the first value, and the first value is, for example, " 1", true, or supported.

Alternatively, if the supporting status of the gNB-DU for the grouping manner is the supporting status of the cell served by the gNB-DU for the grouping manner, the fifth optional implementation may be replaced with: If the cell served by the gNB-DU supports the first grouping manner, and the "information indicating whether the UE supports a first grouping manner" included in the first message specific to the cell indicates that the UE supports the first grouping manner, the first paging manner used in the cell is, for example, performing paging based on the first grouping manner.

In a sixth optional implementation, if the gNB-DU supports the first grouping manner, and the "information indicating whether the UE supports a first grouping manner" included in the first message indicates that the UE does not support the first grouping manner, the first paging manner may be performing paging based on a non-grouping manner. For example, if the gNB-DU does not page the UE in a grouping manner, the gNB-DU does not need to generate first information, for example, does not send the PEI/the WUS. Alternatively, the gNB-DU generates first information, where the first information is, for example, paging control information, and the paging control information does not include a group identifier.

Alternatively, if the supporting status of the gNB-DU for the grouping manner is the supporting status of the cell served by the gNB-DU for the grouping manner, the sixth optional implementation may be replaced with: If the cell served by the gNB-DU supports the first grouping manner, and the "information indicating whether the UE supports a first grouping manner" included in the first message specific to the cell indicates that the UE does not support the first grouping manner, the first paging manner used in the cell may be performing paging based on a non-grouping manner.

In a seventh optional implementation, if the gNB-DU does not support the first grouping manner, the first paging manner may be performing paging based on a non-grouping manner. For example, if the gNB-DU does not page the UE in a grouping manner, the gNB-DU does not need to generate first information, for example, does not send the PEI/the WUS. Alternatively, the gNB-DU generates first information, where the first information is, for example, paging control information, and the paging control information does not include a group identifier.

Alternatively, if the supporting status of the gNB-DU for the grouping manner is the supporting status of the cell served by the gNB-DU for the grouping manner, the seventh optional implementation may be replaced with: If the cell served by the gNB-DU does not support the first grouping manner, the first paging manner used in the cell may be performing paging based on a non-grouping manner.

In addition, if the gNB-DU does not support the first grouping manner, the first message may not include the first group identifier, and the first message may include or may not include the "information indicating whether the UE supports a first grouping manner". Alternatively, if the cell served by the gNB-DU does not support the grouping manner, the first message specific to the cell may not include the first group identifier, and the first message specific to the cell may include or may not include the "information indicating whether the UE supports a first grouping manner". That is, a prerequisite for the seventh optional implementation may be that the first message includes the "information indicating whether the UE supports a first grouping manner" but does not include the first group identifier, or may be that the first message includes neither the first group identifier nor the "information indicating whether the UE supports a first grouping manner". Because the gNB-DU or the cell served by the gNB-DU does not support the first grouping manner, the gNB-DU can page the UE only in the non-grouping manner, that is, does not page the UE in the grouping manner because the first message does not include the first group identifier. Therefore, whether the first message includes the "information indicating whether the UE supports a first grouping manner" does not need to be limited. In other words, the gNB-DU may not need to perform determining based on the "information indicating whether the UE supports a first grouping manner", but selects the non-grouping manner for paging, that is, does not page the UE in the grouping manner.

Optionally, a premise for the case B may alternatively be replaced with: The first message includes the "information indicating whether the UE supports a first grouping manner". That is, the first group identifier is not considered. Regardless of whether the first message includes the first group identifier, determining is performed in several optional implementations of the case B.

C. The first message includes neither the "information indicating whether the UE supports a first grouping manner" nor the first group identifier.

In this case, the gNB-DU cannot page the UE in the second grouping manner, and the gNB-DU does not know a capability of the UE. Therefore, whether the gNB-DU can page the UE in the first grouping manner cannot be determined. Therefore, the first paging manner may be performing paging based on a non-grouping manner. For example, if the gNB-DU does not page the UE in a grouping manner, the gNB-DU does not need to generate first information, for example, does not send the PEI/the WUS. Alternatively, the gNB-DU generates first information, where the first information is, for example, paging control information, and the paging control information does not include a group identifier.

Optionally, in this embodiment of this application, that the first message includes the first group identifier may alternatively be replaced with: The first message indicates that the UE supports the second grouping manner. That the first message does not include the first group identifier may alternatively be replaced with: The first message indicates that the UE does not support the second grouping manner.

Alternatively, if the first message includes the first group identifier, the first message may further include first indication information; or if the first message does not include the first group identifier, the first message does not include first indication information either, where the first indication information may indicate that the paged UE supports the second grouping manner. Alternatively, the first message may include first indication information. If the first message includes the first group identifier, the first indication information may indicate that the paged UE supports the second grouping manner; or if the first message does not include the first group identifier, the first indication information may indicate that the paged UE does not support the second grouping manner.

S404 and S302 in the embodiment shown in FIG. 3 may be a same step. Therefore, for more content (for example, descriptions of the first message) of S404, refer to S302.

In this embodiment of this application, the gNB-CU may send, to the gNB-DU, the information indicating whether the UE supports the first grouping manner. In this way, the gNB-DU can determine whether the UE supports the first grouping manner, or determine a grouping manner supported by the UE, so that the gNB-DU can page the UE in an appropriate manner. The gNB-CU does not need to parse the capability information of the UE, so that load of the gNB-CU can be reduced. In addition, when paging the UE, the gNB-DU may preferentially page the UE in the second grouping manner, to reduce a probability that the UE is falsely alarm.

The following describes a second example of the solution provided in the embodiment shown in FIG. 3, or in other words, a second optional implementation of the solution provided in the embodiment shown in FIG. 3. FIG. 5 is a flowchart of the implementation. In this implementation, a core-network paging process is used as an example.

S501: A core network device sends a second message to a gNB-CU. Accordingly, the gNB-CU receives the second message from the core network device.

Optionally, before S501, S502 may be further included: A UE sends capability information of the UE. Accordingly, a radio access network device receives the capability information of the UE from the UE.

For more content of S501 and S502, refer to S401 and S402 in the embodiment shown in FIG. 4.

S503: A gNB-DU sends second information to the gNB-CU. Accordingly, the gNB-CU receives the second information from the gNB-DU. Optionally, the second information may indicate whether the gNB-DU supports a first grouping manner.

If the gNB-DU determines whether the gNB-DU supports the first grouping manner, the gNB-DU may send the second information to the gNB-CU. If the gNB-CU or another network element (for example, an operation, administration, and maintenance (operation, administration, and maintenance, OAM) network element) determines whether the gNB-DU supports the first grouping manner, S503 may not be performed. Therefore, S503 is an optional step. In addition, if the gNB-CU determines whether the gNB-DU supports the first grouping manner, the gNB-CU may send third information to the gNB-DU, where the third information may indicate whether the gNB-DU supports the first grouping manner.

S504: The gNB-CU sends a first message to the gNB-DU. Accordingly, the gNB-DU receives the first message from the gNB-CU.

After receiving the second message, the gNB-CU may determine, based on the second message, whether the gNB-DU can page the UE in the first grouping manner, and then send the first message to the gNB-DU. It is equivalent to that, in this embodiment of this application, the gNB-CU does not directly send second capability information to the gNB-DU, but indicates, to the gNB-DU after analysis, a grouping manner or a paging manner to be used by the gNB-DU. In this way, load of the gNB-DU can be reduced, and the gNB-DU can page the UE based on an indication of the first message. If content of the second message is different, determining results of the gNB-CU may also be different. The following uses an example for description.
1. The second message includes "paging-related UE air interface capability" information and a first group identifier.

In an optional implementation, if the gNB-DU supports a second grouping manner, the first message may include the first group identifier. Optionally, the first message may further indicate the gNB-DU not to use the first grouping manner, or indicate the gNB-CU to use the second grouping manner. That the first message includes the first group identifier may be considered as implicitly indicating the gNB-DU to use the second grouping manner. The first grouping manner naturally does not need to be used. Therefore, the first message may indicate the gNB-DU not to use the first grouping manner, so that the gNB-DU determines, to a greater extent, to use the second grouping manner; or may not need to indicate the gNB-DU not to use the first grouping manner, to reduce signaling overheads. If a supporting status of the gNB-DU for a grouping manner is a supporting status of a cell served by the gNB-DU for the grouping manner, this optional implementation may be replaced with: If the cell served by the gNB-DU supports the second grouping manner, the first message specific to the cell may include the first group identifier.

In another optional implementation, if the gNB-DU does not support a second grouping manner but supports the first grouping manner, and "information indicating whether the UE supports the first grouping manner" indicates that the UE does not support the first grouping manner, the first message may indicate the gNB-DU not to use the first grouping manner. In this case, the UE does not support the first grouping manner. Therefore, the gNB-DU cannot page the UE in the first grouping manner. In this case, the first message may include the first group identifier, or may not include the first group identifier. If a supporting status of the gNB-DU for a grouping manner is a supporting status of a cell served by the gNB-DU for the grouping manner, this optional implementation may be replaced with: If the cell served by the gNB-DU does not support the second grouping manner but supports the first grouping manner, and the "information indicating whether the UE supports the first grouping manner" indicates that the UE does not support the first grouping manner, the first message specific to the cell may indicate the gNB-DU not to use the first grouping manner.

In still another optional implementation, if the gNB-DU does not support a second grouping manner but supports the first grouping manner, and "information indicating whether the UE supports the first grouping manner" indicates that the UE supports the first grouping manner, the first message may indicate the gNB-DU to use the first grouping manner. If the gNB-DU supports the first grouping manner, and the UE also supports the first grouping manner, the gNB-DU may page the UE in the first grouping manner. In this case, the first message may include the first group identifier, or may not include the first group identifier. If a supporting status of the gNB-DU for a grouping manner is a supporting status of a cell served by the gNB-DU for the grouping manner, this optional implementation may be replaced with: If the cell served by the gNB-DU does not support the second grouping manner but supports the first grouping manner, and the "information indicating whether the UE supports the first grouping manner" indicates that the UE supports the first grouping manner, the first message specific to the cell may indicate the gNB-DU to use the first grouping manner.

In yet another optional implementation, if the gNB-DU supports neither a second grouping manner nor the first grouping manner (or in other words, the gNB-DU does not support a grouping manner), the gNB-DU cannot use the first grouping manner. Therefore, regardless of a result of indicating, by "information indicating whether the UE supports the first grouping manner", whether the UE supports the first grouping manner, the first message may indicate the gNB-DU not to use the first grouping manner. In this case, the first message may include the first group identifier, or may not include the first group identifier. If a supporting status of the gNB-DU for a grouping manner is a supporting status of a cell served by the gNB-DU for the grouping manner, this optional implementation may be replaced with: If the cell served by the gNB-DU supports neither the second grouping manner nor the first grouping manner (or in other words, the cell does not support the grouping manner), regardless of the result of indicating, by the "information indicating whether the UE supports the first grouping manner", whether the UE supports the first grouping manner, the first message specific to the cell may indicate the gNB-DU not to use the first grouping manner.

2. The second message includes "paging-related UE air interface capability" information, but does not include a first group identifier.

In an optional implementation, if the gNB-DU supports the first grouping manner, and information indicating "whether the UE supports the first grouping manner" indicates that the UE does not support the first grouping manner, although the gNB-DU supports the first grouping manner, the gNB-DU cannot page the UE in the first grouping manner because the UE does not support the first grouping manner. In this case, the first message may indicate the gNB-DU not to use the first grouping manner. If a supporting status of the gNB-DU for a grouping manner is a supporting status of a cell served by the gNB-DU for the grouping manner, this optional implementation may be replaced with: If the cell served by the gNB-DU supports the first grouping manner, and the information indicating "whether the UE supports the first grouping manner" indicates that the UE does not support the first grouping manner, the first message specific to the cell may indicate the gNB-DU not to use the first grouping manner.

In another optional implementation, if the gNB-DU supports the first grouping manner, and "information indicating whether the UE supports the first grouping manner" indicates that the UE supports the first grouping manner, the gNB-DU supports the first grouping manner, and the UE also supports the first grouping manner, so that the gNB-DU can page the UE in the first grouping manner. Therefore, the first message may indicate the gNB-DU to use the first grouping manner. If a supporting status of the gNB-DU for a grouping manner is a supporting status of a cell served by the gNB-DU for the grouping manner, this optional implementation may be replaced with: If the cell served by the gNB-DU supports the first grouping manner, and the "information indicating whether the UE supports the first grouping manner" indicates that the UE supports the first grouping manner, the first message specific to the cell may indicate the gNB-DU to use the first grouping manner.

In still another optional implementation, if the gNB-DU does not support the first grouping manner, regardless of a result of indicating, by "information indicating whether the UE supports the first grouping manner", whether the UE supports the first grouping manner, the first message may indicate the gNB-DU not to use the first grouping manner. If a supporting status of the gNB-DU for a grouping manner is a supporting status of a cell served by the gNB-DU for the grouping manner, this optional implementation may be replaced with: If the cell served by the gNB-DU does not support the first grouping manner, regardless of the result of indicating, by the "information indicating whether the UE supports the first grouping manner", whether the UE supports the first grouping manner, the first message specific to the cell may indicate the gNB-DU not to use the first grouping manner.

For example, the first message includes information indicating to the gNB-DU whether to use the first grouping manner, to indicate the gNB-DU to use the first grouping manner or not to use the first grouping manner. For example, a first field may be for carrying the information, and the first field may be a newly defined field in the first message, or may be an existing field in the first message. Optionally, the first message may indicate, to the gNB-DU depending on whether the first message carries the first field, whether to use the first grouping manner. If the first message carries the first field, the first message indicates the gNB-DU to use the first grouping manner; or if the first message does not carry the first field, the first message indicates the gNB-DU not to use the first grouping manner. Alternatively, the first message indicates, to the gNB-DU by using a value of the first field, whether to use the first grouping manner. If the value of the first field is a first value, the first message indicates the gNB-DU to use the first grouping manner; or if the value of the first field is a second value (or in other words, the value of the first field is not a first value), the first message indicates the gNB-DU not to use the first grouping manner. The first value is, for example, "1", and the second value is, for example, "0"; the first value is, for example, true, and the second value is, for example, false; the first value is, for example, supported, and the second value is, for example, not supported; or the first value is, for example, enable, and the second value is, for example, not enable.

Optionally, the first message may further include air interface configuration capability information of a PEI/a WUS, and/or include the first group identifier. If the first message is a paging message between the gNB-CU and the gNB-DU, the first message may further include an identifier of the paged UE, for example, a 5G-S-TMSI of the UE.

S504 and S301 in the embodiment shown in FIG. 3 may be a same step. Therefore, for more content (for example, descriptions of the first message) of S504, refer to S301.

S505: The gNB-DU pages the UE in a first paging manner.

If content included in the first message is different, the first paging manner is accordingly different. The following uses an example for description.

A. The first message includes the first group identifier.

In a first optional implementation, if the gNB-DU supports the second grouping manner, the first paging manner may be performing paging based on the second grouping manner. Optionally, if the gNB-DU supports the second grouping manner, the first message may further indicate not to use the first grouping manner. For example, the gNB-DU generates first information. The first information is, for example, the PEI/the WUS. The PEI/the WUS includes information indicating "an identifier of a group to which the UE belongs in the second grouping manner". For example, the information is the first group identifier, or the information is a bit that corresponds to the group to which the UE belongs and that is in a bitmap indicating the group identifier in the PEI/the WUS, where the bit is set to the first value, and the first value is, for example, "1", true, or supported. For another example, the gNB-DU generates first information. The first information is, for example, paging control information. The paging control information includes information indicating "an identifier of a group to which the UE belongs in the second grouping manner". For example, the information is the first group identifier, or the information is a bit that corresponds to the group to which the UE belongs and that is in a bitmap indicating the group identifier in the paging control information, where the bit is set to the first value, and the first value is, for example, "1", true, or supported.

Alternatively, if the supporting status of the gNB-DU for the grouping manner is the supporting status of the cell served by the gNB-DU for the grouping manner, the first optional implementation may be replaced with: If the cell served by the gNB-DU supports the second grouping manner, the first paging manner used in the cell may be performing paging based on the second grouping manner. Optionally, if the cell served by the gNB-DU supports the second grouping manner, the first message specific to the cell may further indicate not to use the first grouping manner. In this case, for example, first information generated by the gNB-DU may be sent in the cell.

In a second optional implementation, if the gNB-DU does not support the second grouping manner but supports the first grouping manner, and the first message further indicates the gNB-DU to use the first grouping manner, the first paging manner may be performing paging based on the first grouping manner. For example, the gNB-DU groups UEs based on the first grouping manner, and generates first information. The first information is, for example, the PEI/the WUS. The PEI/the WUS includes information indicating "an identifier of a group to which the UE belongs in the first grouping manner". For example, the information is a second group identifier, or the information is a bit that corresponds to the group to which the UE belongs and that is in a bitmap indicating the group identifier in the PEI/the WUS, where the bit is set to the first value, and the first value is, for example, "1", true, or supported. Alternatively, the first information is paging control information. The paging control information includes information indicating "an identifier of a group to which the UE belongs in the first grouping manner". For example, the information is a second group identifier, or the information is a bit that corresponds to the group to which the UE belongs and that is in a bitmap indicating the group identifier in the paging control information, where the bit is set to the first value, and the first value is, for example, "1", true, or supported. The second group identifier is the identifier of the group to which the UE belongs after the gNB-DU groups the UE based on the first grouping manner.

Alternatively, if the supporting status of the gNB-DU for the grouping manner is the supporting status of the cell served by the gNB-DU for the grouping manner, the second optional implementation may be replaced with: If the cell served by the gNB-DU does not support the second grouping manner but supports the first grouping manner, and the first message specific to the cell further indicates the gNB-DU to use the first grouping manner, the first paging manner used in the cell may be performing paging based on the first grouping manner. In this case, for example, first information generated by the gNB-DU may be sent in the cell.

In addition, if the gNB-DU does not support the second grouping manner but supports the first grouping manner, the first message may alternatively not include the first group identifier. Alternatively, if the cell served by the gNB-DU does not support the second grouping manner but supports the first grouping manner, the first message specific to the cell may alternatively not include the first group identifier. That is, a prerequisite for the second optional implementation may be that the first message includes the first group identifier, or may be that the first message does not include the first group identifier (or it is considered that whether the first message includes the first group identifier is not limited) because if the gNB-DU or the cell served by the gNB-DU does not support the second grouping manner, the gNB-DU does not perform paging in the second grouping manner, and the first group identifier is redundant information.

In a third optional implementation, if the gNB-DU does not support the second grouping manner but supports the first grouping manner, and the first message further indicates the gNB-DU not to use the first grouping manner, the first paging manner may be performing paging based on a non-grouping manner. For example, if the gNB-DU does not page the UE in a grouping manner, the gNB-DU does not need to generate first information, for example, does not send the PEI/the WUS. Alternatively, the gNB-DU generates first information, where the first information is, for example, paging control information, and the paging control information does not include a group identifier.

Alternatively, if the supporting status of the gNB-DU for the grouping manner is the supporting status of the cell served by the gNB-DU for the grouping manner, the third optional implementation may be replaced with: If the cell served by the gNB-DU does not support the second grouping manner but supports the first grouping manner, and the first message specific to the cell further indicates the gNB-DU not to use the first grouping manner, the first paging manner used in the cell may be performing paging based on a non-grouping manner.

In addition, a prerequisite for the third optional implementation may be that the first message includes the first group identifier, or may be that the first message does not include the first group identifier (or it is considered that whether the first message includes the first group identifier is not limited) because if the gNB-DU or the cell served by the gNB-DU does not support the second grouping manner, the gNB-DU does not perform paging in the second grouping manner, and the first group identifier is redundant information.

In a fourth optional implementation, if the gNB-DU supports neither the second grouping manner nor the first grouping manner (or in other words, the gNB-DU does not support a grouping manner), the first paging manner may be performing paging based on a non-grouping manner. For example, if the gNB-DU does not page the UE in the grouping manner, the gNB-DU does not need to generate first information, for example, does not send the PEI/the WUS. Alternatively, the gNB-DU generates first information, where the first information is, for example, paging control information, and the paging control information does not include a group identifier.

Alternatively, if the supporting status of the gNB-DU for the grouping manner is the supporting status of the cell served by the gNB-DU for the grouping manner, the fourth optional implementation may be replaced with: If the cell served by the gNB-DU supports neither the second grouping manner nor the first grouping manner (or in other words, the cell does not support the grouping manner), the first paging manner used in the cell may be performing paging based on a non-grouping manner.

In addition, a prerequisite for the fourth optional implementation may be that the first message includes the first group identifier, or may be that the first message does not include the first group identifier (or it is considered that whether the first message includes the first group identifier is not limited) because if the gNB-DU or the cell served by the gNB-DU does not support the second grouping manner, the gNB-DU does not perform paging in the second grouping manner, and the first group identifier is redundant information.

B. The first message does not include the first group identifier.

In a fifth optional implementation, if the gNB-DU supports the first grouping manner, and the first message further indicates the gNB-DU to use the first grouping manner, the first paging manner may be performing paging based on the first grouping manner. For example, the gNB-DU groups UEs based on the first grouping manner, and generates first information. The first information is, for example, the PEI/the WUS. The PEI/the WUS includes information indicating "an identifier of a group to which the UE belongs in the first grouping manner". For example, the information is a second group identifier, or the information is a bit that corresponds to the group to which the UE belongs and that is in a bitmap indicating the group identifier in the PEI/the WUS, where the bit is set to the first value, and the first value is, for example, "1", true, or supported. Alternatively, the first information is paging control information. The paging control information includes information indicating "an identifier of a group to which the UE belongs in the first grouping manner". For example, the information is a second group identifier, or the information is a bit that corresponds to the group to which the UE belongs and that is in a bitmap indicating the group identifier in the paging control information, where the bit is set to the first value, and the first value is, for example, "1", true, or supported. The second group identifier is the identifier of the group to which the UE belongs after the gNB-DU groups the UE based on the first grouping manner.

Alternatively, if the supporting status of the gNB-DU for the grouping manner is the supporting status of the cell served by the gNB-DU for the grouping manner, the fifth optional implementation may be replaced with: If the cell served by the gNB-DU supports the first grouping manner, and the first message specific to the cell further indicates the gNB-DU to use the first grouping manner, the first paging manner used in the cell may be performing paging based on the first grouping manner. For example, first information generated by the gNB-DU may be sent in the cell.

In a sixth optional implementation, if the gNB-DU does not support the second grouping manner but supports the first grouping manner, and the first message further indicates the gNB-DU not to use the first grouping manner, the first paging manner may be performing paging based on a non-grouping manner. For example, the gNB-DU generates first information, where the first information is, for example, paging control information, and the paging control information does not include a group identifier. Alternatively, in this case, the gNB-DU may give up paging the UE. Therefore, the gNB-DU does not need to generate first information.

Alternatively, if the supporting status of the gNB-DU for the grouping manner is the supporting status of the cell served by the gNB-DU for the grouping manner, the sixth optional implementation may be replaced with: If the cell served by the gNB-DU does not support the second grouping manner but supports the first grouping manner, and the first message specific to the cell further indicates the gNB-DU not to use the first grouping manner, the first paging manner used in the cell may be performing paging based on a non-grouping manner. For example, first information generated by the gNB-DU may be sent in the cell.

In a seventh optional implementation, if the gNB-DU does not support the first grouping manner, the first paging manner may be performing paging based on a non-grouping manner. For example, if the gNB-DU does not page the UE in the grouping manner, the gNB-DU does not need to generate first information, for example, does not send the PEI/the WUS. Alternatively, the gNB-DU generates first information, where the first information is, for example, paging control information, and the paging control information does not include a group identifier.

Alternatively, if the supporting status of the gNB-DU for the grouping manner is the supporting status of the cell served by the gNB-DU for the grouping manner, the seventh optional implementation may be replaced with: If the cell served by the gNB-DU does not support the first grouping manner, the first paging manner used in the cell may be performing paging based on a non-grouping manner. For example, if the gNB-DU generates first information, the first information may be sent in the cell.

In an eighth optional implementation, if the first message indicates not to use the first grouping manner, the first paging manner may be performing paging based on a non-grouping manner. In other words, if the first message indicates not to use the first grouping manner, the gNB-DU cannot perform paging in the first grouping manner regardless of whether the gNB-DU supports the first grouping manner. Therefore, in this case, the gNB-DU may not need to determine whether the gNB-DU supports the first grouping manner. For example, if the gNB-DU does not page the UE in the grouping manner, the gNB-DU does not need to generate first information, for example, does not send the PEI/the WUS. Alternatively, the gNB-DU generates first information, where the first information is, for example, paging control information, and the paging control information does not include a group identifier.

Alternatively, if the supporting status of the gNB-DU for the grouping manner is the supporting status of the cell served by the gNB-DU for the grouping manner, the eighth optional implementation may be replaced with: If the first message specific to the cell served by the gNB-DU indicates not to use the first grouping manner, the first paging manner used in the cell may be performing paging based on a non-grouping manner. For example, if the gNB-DU generates first information, the first information may be sent in the cell.

S505 and S302 in the embodiment shown in FIG. 3 may be a same step. Therefore, for more content (for example, descriptions of the first message) of S505, refer to S302.

In this embodiment of this application, the gNB-CU may directly indicate a grouping manner or paging manner to be used by the gNB-DU on earth, so that the gNB-DU can page the UE in an appropriate manner. The gNB-DU does not need to parse the capability information of the UE, so that the load of the gNB-DU can be reduced. In addition, when paging the UE, the gNB-DU may preferentially page the UE in the second grouping manner, to reduce a probability that the UE is falsely alarm.

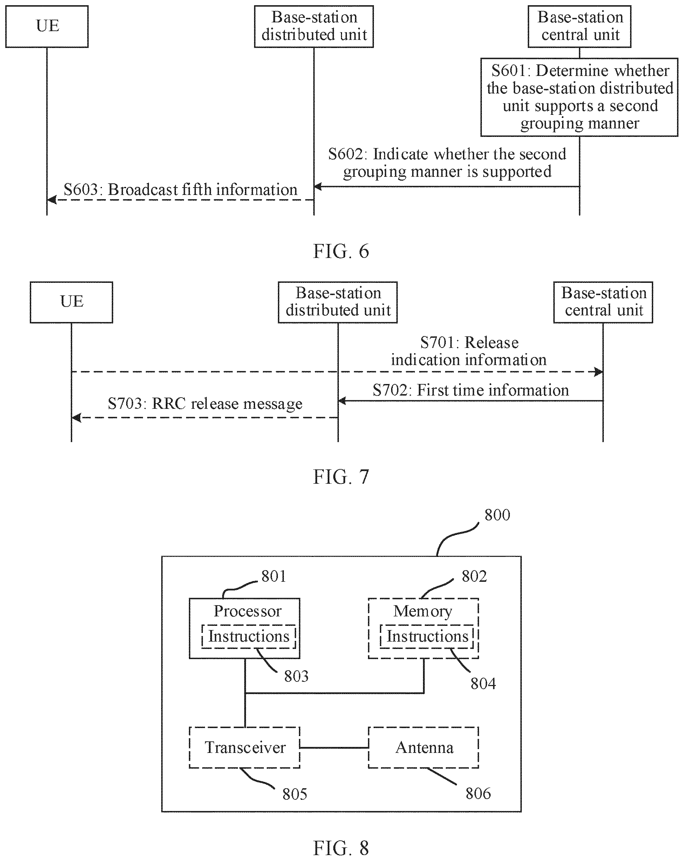

Next, another question is considered. For a cell covered by a RAN, the RAN needs to indicate (for example, through sending of broadcast information) whether the current cell supports a grouping manner or which grouping manner or grouping manners are supported by the current cell. In a CU-DU split architecture, a task of sending the broadcast information is completed by a gNB-DU. However, the gNB-DU does not know the information, and therefore cannot indicate the information to a UE. As a result, the UE cannot determine a supporting status of the current cell for the grouping manner. In view of this, an embodiment of this application provides a second communication method. According to the method, the gNB-DU can indicate, to the UE, the supporting status of the cell for the grouping manner. FIG. 6 is a flowchart of the method.

S601: AgNB-CU determines whether the gNB-DU supports a second grouping manner. S601 may alternatively be understood as: The gNB-CU determines whether a cell served by the gNB-DU supports the second grouping manner, where the cell includes one or more cells served by the gNB-DU, and the one or more cells are a part or all of cells served by the gNB-DU.

A RAN may determine, depending on whether a core network supports the second grouping manner, whether the cell supports the second grouping manner. For example, if the core network supports the second grouping manner, and the RAN also supports the second grouping manner, the RAN may determine that the cell supports the second grouping manner; or if the core network does not support the second grouping manner, the RAN may determine that the cell does not support the second grouping manner. Therefore, the RAN may interact with the core network to determine whether the cell supports the second grouping manner. For example, the gNB-CU in the RAN interacts with the core network, and the gNB-CU may obtain, by interacting with the core network, information indicating whether the core network supports the second grouping manner, thereby determining whether the cell supports the second grouping manner.

Optionally, if the cell supports the second grouping manner, the gNB-CU may further determine, based on a total group quantity that is in the second grouping manner and that is supported by the core network, a total group quantity that is in the second grouping manner and that is supported by the cell. For example, the total group quantity that is in the second grouping manner and that is supported by the cell is the same as the total group quantity that is in the second grouping manner and that is supported by the core network. Therefore, if the cell supports the second grouping manner, the gNB-CU may further interact with the core network, to determine the total group quantity that is in the second grouping manner and that is supported by the cell. In this embodiment of this application, a process of interaction between the gNB-DU and the core network is not limited. For example, interaction may be performed by using a message. For example, a core network device sends a second message to the gNB-CU. The second message may indicate whether the core network supports the second grouping manner, and optionally, may further indicate the total group quantity that is in the second grouping manner and that is supported by the core network. Alternatively, the gNB-CU may interact with the core network by using a plurality of messages. The total group quantity that is in the second grouping manner and that is supported by the cell may be considered as a maximum group quantity supported by the cell in the second grouping manner.

For a first grouping manner, the RAN may determine whether the cell supports the first grouping manner. If the cell supports the first grouping manner, the RAN may determine a total group quantity that is in the first grouping manner and that is supported by the cell. Generally, the determining performed by the RAN is performed by the gNB-DU in the RAN, or may be performed by the gNB-CU. The total group quantity that is in the first grouping manner and that is supported by the cell may be considered as a maximum group quantity supported by the cell in the first grouping manner.

The first grouping manner is, for example, a grouping manner controlled by the radio access network, or in other words, a grouping manner that is based on a UE ID. The second grouping manner is, for example, a grouping manner controlled by the core network, or in other words, a grouping manner that is based on an identifier allocated by the core network device.

S602: The gNB-CU sends first information to the gNB-DU. Accordingly, the gNB-DU receives the first information from the gNB-CU. The first information may indicate whether the gNB-DU supports the second grouping manner. Whether the gNB-DU supports the second grouping manner may be whether the cell served by the gNB-DU supports the second grouping manner. Therefore, the first information may alternatively indicate whether the cell supports the second grouping manner.

If the gNB-CU determines that the cell supports the second grouping manner, the first information indicates that the cell supports the second grouping manner; or if the gNB-CU determines that the cell does not support the second grouping manner, the first information indicates that the cell does not support the second grouping manner. If the cell supports the second grouping manner, and the gNB-CU further determines the total group quantity that is in the second grouping manner and that is supported by the cell, optionally, the first information may further indicate the total group quantity that is in the second grouping manner and that is supported by the cell. Alternatively, if the cell supports the second grouping manner, and the gNB-CU further determines the total group quantity that is in the second grouping manner and that is supported by the cell, the gNB-CU may further send second information to the gNB-DU, where the second information may indicate the total group quantity that is in the second grouping manner and that is supported by the cell. The gNB-DU can determine, based on the second information, the total group quantity that is in the second grouping manner and that is supported by the cell. Alternatively, in another possibility, the first information indicates that the cell supports the second grouping manner. Because that the cell supports the second grouping manner is implicitly indicated when the first information indicates the total group quantity that is in the second grouping manner and that is supported by the cell, a specific indication manner is that the first information indicates the total group quantity that is in the second grouping manner and that is supported by the cell.

In addition, if the gNB-CU determines whether the cell supports the first grouping manner, optionally, the first information may further indicate whether the cell supports the first grouping manner. Alternatively, if the gNB-CU determines whether the cell supports the first grouping manner, the gNB-CU may further send third information to the gNB-DU, where the third information indicates whether the cell supports the first grouping manner. If the gNB-CU determines that the cell supports the first grouping manner, the first information or the third information indicates that the cell supports the first grouping manner; or if the gNB-CU determines that the cell does not support the first grouping manner, the first information or the third information indicates that the cell does not support the first grouping manner. If the cell supports the first grouping manner, and the gNB-CU further determines the total group quantity that is in the first grouping manner and that is supported by the cell, optionally, the first information or the third information may further indicate the total group quantity that is in the first grouping manner and that is supported by the cell. Alternatively, if the cell supports the first grouping manner, and the gNB-CU further determines the total group quantity that is in the first grouping manner and that is supported by the cell, the gNB-CU may further send fourth information to the gNB-DU, where the fourth information may indicate the total group quantity that is in the first grouping manner and that is supported by the cell. The gNB-DU can determine, based on the fourth information, the total group quantity that is in the first grouping manner and that is supported by the cell. Alternatively, in another possibility, the third information indicates that the cell supports the first grouping manner. Because that the cell supports the first grouping manner is implicitly indicated when the third information indicates the total group quantity that is in the first grouping manner and that is supported by the cell, a specific indication manner is that the third information indicates the total group quantity that is in the first grouping manner and that is supported by the cell.

In addition, if the gNB-DU determines whether the cell supports the first grouping manner, the gNB-CU may not need to indicate, to the gNB-DU, a supporting case of the cell for the first grouping manner.

For example, the first information may be included in a first message. For example, if the gNB-CU sends the first information to the gNB-DU when setting up a connection to the gNB-DU, the first message is, for example, an F1 setup response (F1 setup response). Alternatively, the gNB-CU may send the first message to the gNB-DU after setting up a connection to the gNB-DU.

Optionally, if the gNB-CU further sends the second information to the gNB-DU, the second information may also be included in the first message, or the second information is included in the second message.

Optionally, if the gNB-CU further sends the third information to the gNB-DU, the third information may also be included in the first message, or the third information is included in a third message.

Optionally, if the gNB-CU further sends the fourth information to the gNB-DU, the fourth information may also be included in the first message, or the fourth information is included in a fourth message.

The first message, the second message, the third message, and the fourth message may be a same message; any three messages in the four messages are a same message, and the other message is a different message; any two messages in the four messages are a same message, and the other two messages are messages different from each other; or any two messages in the four messages are a same message, and the other two messages are a same message.

For example, a first field included in the first message may be for carrying the first information, and the first field may be a newly defined field in the first message, or may be an existing field in the first message. Optionally, the first message may indicate, depending on whether the first message includes the first field, whether the cell supports the second grouping manner. If the first message carries the first field, the first message indicates that the cell supports the second grouping manner; or if the first message does not carry the first field, the first message indicates that the cell does not support the second grouping manner. Alternatively, the first message indicates, by using a value of the first field, whether the cell supports the second grouping manner. If the value of the first field is a first value, the first message indicates that the cell supports the second grouping manner; or if the value of the first field is a second value (or in other words, the value of the first field is not a first value), the first message indicates that the cell does not support the second grouping manner. The first value is, for example, "1", and the second value is, for example, "0"; the first value is, for example, true, and the second value is, for example, false; the first value is, for example, supported, and the second value is, for example, not supported; or the first value is, for example, enable, and the second value is, for example, not enable.

For example, the gNB-CU sends the third information to the gNB-DU, and the third information is included in the first message. For example, a second field included in the first message may be for carrying the third information, and the second field may be a newly defined field in the first message, or may be an existing field in the first message. Optionally, the first message may indicate, depending on whether the first message includes the second field, whether the cell supports the first grouping manner. If the first message carries the second field, the first message indicates that the cell supports the first grouping manner; or if the first message does not carry the second field, the first message indicates that the cell does not support the first grouping manner. Alternatively, the first message indicates, by using a value of the second field, whether the cell supports the first grouping manner. If the value of the second field is a first value, the first message indicates that the cell supports the first grouping manner; or if the value of the second field is a second value (or in other words, the value of the second field is not a first value), the first message indicates that the cell does not support the first grouping manner. If the third information is included in the third message, an indication manner is similar.

S603: The gNB-DU broadcasts fifth information.

The gNB-DU may determine the fifth information based on the first information (or the first information and the second information; the first information and the third information; the first information, the second information, and the third information; the first information, the third information, and the fourth information; the first information, the second information, the third information, and the fourth information; or the like), where the fifth information may indicate one or more of the following: whether the cell supports a grouping manner, a grouping manner (for example, the first grouping manner and/or the second grouping manner) supported by the cell, or a maximum group quantity supported by the cell in the supported grouping manner (for example, the total group quantity that is in the first grouping manner and that is supported by the cell, and/or the total group quantity that is in the second grouping manner and that is supported by the cell).

S603 is an optional step.

Alternatively, this embodiment of this application may alternatively be replaced with: If the gNB-CU determines whether the cell supports the first grouping manner, the gNB-CU may indicate, to the gNB-DU, whether the cell supports the first grouping manner. If the cell supports the first grouping manner, optionally, the gNB-CU may further indicate, to the gNB-DU, the maximum group quantity supported by the cell in the first grouping manner. In addition, optionally, the gNB-CU may further indicate, to the gNB-DU, whether the cell supports the second grouping manner. If the cell supports the second grouping manner, optionally, the gNB-CU may further indicate, to the gNB-DU, the maximum group quantity supported by the cell in the second grouping manner. For an indication manner, refer to the foregoing descriptions.

According to the method provided in this embodiment of this application, the gNB-DU can determine the supporting status of the cell for the grouping manner, so that corresponding information can be broadcast. In this way, the UE can determine a supporting status of a current cell for the grouping manner, so that the UE receives paging in a corresponding grouping manner.

Next, one more question is considered. If a UE expects to enter an RRC idle state or an RRC inactive state from an RRC connected (RRC connected) state (where for example, for a multi-card terminal, there may be case in which communication can be performed on only one card simultaneously; for example, if the multi-card terminal currently communicates with a network device A on a card 1, and a service also reaches a card 2 in this case (where for example, a network pages the card 2), the multi-card terminal may choose to interrupt communication between the card 1 and the network device A and set up communication between the card 2 and a network device B; for the card 1, the UE expects to enter the RRC idle state or the RRC inactive state from the RRC connected state; the multi-card terminal is a UE on which two or more calling cards (for example, SIM cards or USIM cards) are installed simultaneously; the multi-card terminal may respectively register with different networks by using the two or more calling cards, for example, different radio access network devices and/or different core network devices; and it may be understood that one card corresponds to one UE, and a plurality of cards in the multi-card terminal may be understood as a plurality of UEs), the UE may send release indication information to the radio access network device, to indicate that the UE expects to or intends to leave the RRC connected state. Optionally, the release indication information may further indicate an RRC state to which the UE expects to convert, for example, the RRC idle state or the RRC inactive state. After sending the release indication information, the UE needs to wait for a period of time. A length T of the period of time may be controlled by using a timer. If the UE receives an RRC release (RRC release) message from the radio access network device within the duration T, the UE enters a corresponding state based on an indication of the RRC release message, where the RRC release message may indicate the UE to enter the RRC idle state or the RRC inactive state. If the UE does not receive an RRC release message from the network device within the duration T, the UE automatically enters the RRC idle state.

After receiving the release indication information of the UE, the network device needs to send the RRC release message to the UE within the duration T. In a CU-DU architecture, a gNB-CU receives the release indication information (where for example, the release indication information is carried in an RRC message) from the UE. If the gNB-CU determines the RRC release message to be sent to the UE, the gNB-CU sends the RRC release message to the gNB-DU. Finally, the gNB-DU schedules a radio resource to send the RRC release message to the UE. However, only the gNB-CU knows the duration T (where for example, the duration T is configured by the gNB-CU for the UE by using an RRC message). That is, the gNB-CU may maintain the duration T, but the gNB-DU cannot maintain the duration T. In addition, only the gNB-CU knows time at which the release indication information is received. That is, the gNB-CU knows start time of starting the timer for controlling the duration T, but the gNB-DU does not know. Therefore, the gNB-CU knows duration within which the RRC release message needs to be sent to the UE, so that the UE can correctly receive the RRC release message, but the gNB-DU does not know. In this case, time at which the gNB-DU sends the RRC release message may be beyond the duration T. In other words, the gNB-DU may send the RRC release message to the UE after the duration T expires. In this case, the UE has automatically converted to the RRC idle state, and no longer receives a message from the gNB-DU. However, the gNB-DU and the gNB-CU may consider that the RRC release message has been successfully sent to the UE. If the RRC release message indicates the UE to convert to the RRC inactive state, a problem of state misalignment between the network device (for example, the gNB-CU) and the UE may be caused. That is, the network device considers that the UE is in the RRC inactive state, but the UE actually has converted to the RRC idle state. In addition, deterioration of performance of the UE may be caused. For example, the UE could have been in the RRC inactive state, but can only convert to the RRC idle state because the UE does not receive the RRC release message in time. In this case, if the UE needs to resume an RRC connection, there is extra consumption such as a delay, power consumption, or signaling overheads.

Therefore, an embodiment of this application provides a third communication method. According to the method, a gNB-DU can send an RRC release message to a UE at appropriate time as much as possible. FIG. 7 is a flowchart of the method.

S701: The UE sends release indication information to a gNB-CU. Accordingly, the gNB-CU receives the release indication information from the UE.

If the UE in an RRC connected state intends to leave the RRC connected state, the UE may send the release indication information to the gNB-CU. The release indication information may indicate that the UE expects or intends to leave the RRC connected state. Optionally, the release indication information may further indicate an RRC state to which the UE expects to convert (or switch, or enter), for example, an RRC idle state or an RRC inactive state. The release indication information is, for example, included in an RRC message. The RRC message is, for example, a UE assistance information message, or may be another message.

S702: The gNB-CU sends a first message to the gNB-DU. Accordingly, the gNB-DU receives the first message from the gNB-CU.

The first message may include first time information. The first time information may be for determining time within which the RRC release message is sent to the UE. The RRC release message may be for releasing the UE from the RRC connected state to the RRC idle state or the RRC inactive state. Optionally, the RRC release message may further indicate the UE to enter the RRC idle state or the RRC inactive state. If the RRC release message indicates the UE to enter the RRC idle state, it indicates that the RRC release message is for releasing the UE from the RRC connected state to the RRC idle state; or if the RRC release message indicates the UE to enter the RRC inactive state, it indicates that the RRC release message is for releasing the UE from the RRC connected state to the RRC inactive state.

Optionally, the gNB-CU sends the first time information to the gNB-DU at the beginning. For example, the gNB-CU sends the first time information to the gNB-DU before receiving the RRC release indication information from the UE. Therefore, S702 may be performed before or after S701. For example, the gNB-CU sends the first time information to the gNB-DU in a UE context setup (UE context setup) process. In this case, the first message is, for example, a UE context setup request (UE context setup request) message. Alternatively, the gNB-CU sends the first time information to the gNB-DU in a UE context modification (UE context modification) process. In this case, the first message is, for example, a UE context modification request (UE context modification request) message.

If the gNB-CU sends the first time information to the gNB-DU at the beginning, the gNB-CU may further send the RRC release message to the gNB-DU after receiving the release indication information from the UE. After the gNB-DU receives the RRC release message from the gNB-CU, the gNB-DU sends the RRC release message to the UE based on the previously obtained first time information within the time within which the UE can correctly receive the RRC release message. Optionally, the RRC release message may further include indication information. Alternatively, indication information is not included in the RRC release message. The gNB-CU may further send the indication information to the gNB-DU when sending the RRC release message to the gNB-DU. The indication information may indicate whether to send the RRC release message to the UE based on the first time information, indicate whether to consider time information (for example, the first time information) when the RRC release message is sent to the UE, indicate that the RRC release message is caused by a plurality of cards, or indicate that the RRC release message corresponds to an RRC release that is based on automatic leave. The RRC release message may be generated based on another factor in addition to the release indication information from the UE. If the RRC release message is generated based on the another factor, the gNB-DU does not need to consider the first time information when sending the RRC release message to the UE. Therefore, if the RRC release message is generated due to the release indication information from the UE, the gNB-DU needs to consider the first time information, and the indication information may indicate to send the RRC release message to the UE based on the first time information. If the RRC release message is normally generated due to another reason, the gNB-DU does not need to consider the first time information, and the indication information may indicate not to send the RRC release message to the UE based on the first time information. Alternatively, in this case, the indication information may not be sent.

Alternatively, the gNB-CU may send the first time information to the gNB-DU when sending the RRC release message to the gNB-DU. For example, the first message further includes the RRC release message. For example, the first message is sent to the gNB-DU in a downlink RRC message transfer (DL RRC message transfer) process, and the first message is, for example, a downlink RRC message transfer (DL RRC message transfer) message. Alternatively, the RRC release message and the first message are different messages, but may be simultaneously sent to the gNB-DU.

S703: The gNB-DU sends the RRC release message to the UE based on the first time information. For example, the gNB-DU determines, based on the first time information, duration that the UE waits to receive the RRC release message, and sends the RRC release message to the UE within the duration that the UE waits to receive the RRC release message. Accordingly, the UE receives the RRC release message from the gNB-DU. For example, the UE may receive the RRC release message from the gNB-DU based on first duration.

Optionally, the duration indicated by the first time information is the first duration. The first duration may be the duration that the UE waits after the UE sends the release indication information to the gNB-CU. When the first duration expires, if the UE does not receive the RRC release message, the UE enters the RRC idle state. For example, the first duration is the foregoing duration T. It is assumed that after receiving the release indication information of the UE, the gNB-CU immediately generates the RRC release message and sends the RRC release message to the gNB-DU, and processing time of the gNB-CU is negligible. That is, after receiving the RRC release message from the gNB-CU, the gNB-DU may send the RRC release message to the UE within the first duration. Alternatively, the gNB-DU may estimate, based on an empirical value, processing duration that is of the gNB-CU and that is after the gNB-CU receives the release indication information. The processing duration is represented by, for example, P. That is, after receiving the RRC release message from the gNB-CU, the gNB-DU may send the RRC release message to the UE within T-P. Herein, that the first duration is the duration T is used as an example.

Alternatively, the duration indicated by the first time information is less than the first duration. For example, the duration indicated by the first time information is available time within which the gNB-DU sends the RRC release message to the UE. For example, the duration indicated by the first time information is a difference between the first duration and processing duration of the gNB-CU, and the processing duration of the gNB-CU is duration of processing the release indication information from the UE by the gNB-CU. For example, the duration indicated by the first time information is T-P above. If the gNB-CU sends the first time information to the gNB-DU at the beginning, a value of P may be determined by the gNB-CU based on an empirical value. Alternatively, if the gNB-DU sends the first time information when sending the RRC release message to the gNB-DU, a value of P may be actual processing duration that is after the gNB-CU receives the release indication information this time, or may be determined by the gNB-CU based on an empirical value. After determining the value of P, the gNB-CU may send, to the gNB-DU, a value that is of T-P and that is obtained through calculation. In this case, after receiving the RRC release message from the gNB-CU, the gNB-DU may send the RRC release message to the UE within T-P.

S701 and S703 are both optional steps.

According to the solution provided in this embodiment of this application, the gNB-DU determines the duration within which the RRC release message needs to be sent to the UE, so that the UE can correctly receive the RRC release message. In this way, the gNB-DU can send the RRC release message to the UE within the time within which the UE can correctly receive the RRC release message. A problem of state misalignment between a network device (for example, the gNB-CU) and the UE is avoided as much as possible, and deterioration of performance of the UE can be avoided as much as possible.

FIG. 8 is a schematic diagram of a structure of a communication apparatus 800 according to an embodiment of this application. The communication apparatus 800 may be the base-station central unit in any one of the embodiment shown in FIG. 3 to the embodiment shown in FIG. 7, and is configured to implement the methods performed by the base-station central unit in the foregoing method embodiments. Alternatively, the communication apparatus 800 may be the base-station distributed unit in any one of the embodiment shown in FIG. 3 to the embodiment shown in FIG. 7, and is configured to implement the methods performed by the base-station distributed unit in the foregoing method embodiments. For specific functions, refer to the descriptions in the foregoing method embodiments.

The communication apparatus 800 includes one or more processors 801. The processor 801 may also be referred to as a processing unit, and may implement a control function. The processor 801 may be a general-purpose processor, a dedicated processor, or the like, for example, includes a baseband processor, a central processing unit, an application processor, a modem processor, a graphics processing unit, an image signal processor, a digital signal processor, a video codec processor, a controller, a memory, and/or a neural-network processing unit. The baseband processor may be configured to process a communication protocol and communication data. The central processing unit may be configured to control the communication apparatus 800, and execute a software program and/or process data. Different processors may be independent components, or may be integrated into one or more processors, for example, integrated into one or more application-specific integrated circuits.

Optionally, the communication apparatus 800 includes one or more memories 802, configured to store instructions 804. The instructions 804 may be run on the processor, so that communication apparatus 800 performs the methods in the foregoing method embodiments. Optionally, the memory 802 may further store data. The processor and the memory may be separately disposed, or may be integrated together.

Optionally, the communication apparatus 800 may store instructions 803 (which may also be referred to as code or programs sometimes). The instructions 803 may be run on the processor, so that the communication apparatus 800 performs the methods in the foregoing embodiments. The processor 801 may store data.

Optionally, the communication apparatus 800 may further include a transceiver 805 and an antenna 806. The transceiver 805 may be referred to as a transceiver unit, a transceiver, a transceiver circuit, an input/output interface, or the like, and is configured to implement a transceiver function of the communication apparatus 800 through the antenna 806.

Optionally, the communication apparatus 800 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 800 may include more or fewer components, some components are integrated, or some components are split. These components may be hardware, software, or a combination implementation of the software and the hardware.

The processor 801 and the transceiver 805 in this embodiment of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The communication apparatus that implements the descriptions in this specification may be an independent device (for example, an independent integrated circuit and a mobile phone), or may be a part of a large device (for example, a module that may be embedded in another device). For details, refer to the foregoing descriptions of the base-station central unit or the base-station distributed unit. Details are not described herein again.

A person of ordinary skill in the art may be aware that, in combination with the examples described in embodiments disclosed in this specification, units and steps can be implemented by electronic hardware or a combination of computer software and the electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

In the several embodiments provided in this application, it should be understood that the disclosed system, apparatus, and method may be implemented in other manners. For example, the foregoing apparatus embodiment is merely an example. For example, division into the units is merely logical function division. The units described as separate parts may or may not be physically separate, and parts shown as units may or may not be physical units, that is, may be located in one place, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing computer-readable storage medium may be any usable medium accessible to a computer. By way of example but not limitation, the computer-readable medium may include a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disk storage, a magnetic disk storage medium, another magnetic storage device, or any other medium that can be for carrying or storing expected program code in a form of instructions or a data structure and that can be accessed by a computer. In addition, by way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Embodiment 1: A communication method, applied to a base-station distributed unit, where the method includes:
receiving a first message from a base-station central unit, where the first message is for determining whether a to-be-paged terminal device supports a first grouping manner and/or determining a paging manner for the to-be-paged terminal device; and
paging the terminal device in a first paging manner, where the first paging manner is determined based on the first message.

Embodiment 2: The method according to Embodiment 1, where the first paging manner is performing paging based on the first grouping manner, performing paging based on a second grouping manner, or performing paging based on a non-grouping manner.

Embodiment 3: The method according to Embodiment 1 or 2, where the first paging manner is performing paging based on the first grouping manner or performing paging based on the second grouping manner, and the paging the terminal device in a first paging manner includes:
generating first information, where the first information includes a group identifier determined based on the first message, and the first information indicates the terminal device corresponding to the group identifier to receive a paging message; and
sending the first information.

Embodiment 4: The method according to Embodiment 3, where the first information is paging control information or a wake-up signal.

Embodiment 5: The method according to Embodiment 3 or 4, where
the first message includes a first group identifier; and if the base-station distributed unit supports the second grouping manner, the first paging manner is performing paging based on the second grouping manner, where the first group identifier is an identifier of a group to which the terminal device belongs in the second grouping manner;
the first message includes a first group identifier and information indicating whether the terminal device supports the first grouping manner, where the first group identifier is an identifier of a group to which the terminal device belongs in the second grouping manner; and if the base-station distributed unit does not support the second grouping manner but supports the first grouping manner, and the information indicating whether the terminal device supports the first grouping manner indicates that the terminal device supports the first grouping manner, the first paging manner is performing paging based on the first grouping manner;
the first message includes a first group identifier and information indicating whether the terminal device supports the first grouping manner, where the first group identifier is an identifier of a group to which the terminal device belongs in the second grouping manner; and if the base-station distributed unit does not support the second grouping manner but supports the first grouping manner, and the information indicating whether the terminal device supports the first grouping manner indicates that the terminal device does not support the first grouping manner, the first paging manner is performing paging based on the non-grouping manner; or
if the base-station distributed unit supports neither the second grouping manner nor the first grouping manner, the first paging manner is performing paging based on the non-grouping manner.

Embodiment 6: The method according to Embodiment 3 or 4, where
the first message includes information indicating whether the terminal device supports the first grouping manner but does not include a first group identifier, where the first group identifier is an identifier of a group to which the terminal device belongs in the second grouping manner; and if the base-station distributed unit supports the first grouping manner, and the information indicating whether the terminal device supports the first grouping manner indicates that the terminal device supports the first grouping manner, the first paging manner is performing paging based on the first grouping manner;
the first message includes information indicating whether the terminal device supports the first grouping manner but does not include a first group identifier, where the first group identifier is an identifier of a group to which the terminal device belongs in the second grouping manner; and if the base-station distributed unit supports the first grouping manner, and the information indicating whether the terminal device supports the first grouping manner indicates that the terminal device does not support the first grouping manner, the first paging manner is performing paging based on the non-grouping manner; or
the first message does not include a first group identifier, where the first group identifier is an identifier of a group to which the terminal device belongs in the second grouping manner; and if the base-station distributed unit does not support the first grouping manner, the first paging manner is performing paging based on the non-grouping manner.

Embodiment 7: The method according to Embodiment 3 or 4, where if the first message includes neither information indicating whether the terminal device supports the first grouping manner nor a first group identifier, the first paging manner is performing paging based on the non-grouping manner, where the first group identifier is an identifier of a group to which the terminal device belongs in the second grouping manner.

Embodiment 8: The method according to any one of Embodiments 5 to 7, where
the first message includes a first field, to indicate that the terminal device supports the first grouping manner; or the first message does not include a first field, to indicate that the terminal device does not support the first grouping manner; or
a value of a first field included in the first message is a first value, to indicate that the terminal device supports the first grouping manner; or a value of a first field included in the first message is a second value, to indicate that the terminal device does not support the first grouping manner.

Embodiment 9: The method according to Embodiment 5 or 6, where
the first message includes a terminal-device radio paging information container, where the terminal-device radio paging information container carries the information indicating whether the terminal device supports the first grouping manner.

Embodiment 10: The method according to Embodiment 3 or 4, where
the first message includes a first group identifier, where the first group identifier is an identifier of a group to which the terminal device belongs in the second grouping manner; and if the base-station distributed unit supports the second grouping manner, the first paging manner is performing paging based on the second grouping manner;
if the base-station distributed unit does not support the second grouping manner but supports the first grouping manner, and the first message further indicates to use the first grouping manner, the first paging manner is performing paging based on the first grouping manner;
if the base-station distributed unit does not support the second grouping manner but supports the first grouping manner, and the first message further indicates not to use the first grouping manner, the first paging manner is performing paging based on the non-grouping manner; or
if the base-station distributed unit supports neither the second grouping manner nor the first grouping manner, the first paging manner is performing paging based on the non-grouping manner.

Embodiment 11: The method according to Embodiment 3 or 4, where the first message does not include a first group identifier, where the first group identifier is an identifier of a group to which the terminal device belongs in the second grouping manner, where
if the base-station distributed unit supports the first grouping manner, and the first message further indicates to use the first grouping manner, the first paging manner is performing paging based on the first grouping manner;
if the base-station distributed unit supports the first grouping manner, and the first message further indicates not to use the first grouping manner, the first paging manner is performing paging based on the non-grouping manner;
if the first message further indicates not to use the first grouping manner, the first paging manner is performing paging based on the non-grouping manner; or
if the base-station distributed unit does not support the first grouping manner, the first paging manner is performing paging based on the non-grouping manner.

Embodiment 12: The method according to Embodiment 10 or 11, where
the first message includes a first field, to indicate to use the first grouping manner; or the first message does not include a first field, to indicate not to use the first grouping manner; or
a value of a first field included in the first message is a first value, to indicate to use the first grouping manner; or a value of a first field included in the first message is a second value, to indicate not to use the first grouping manner.

Embodiment 13: The method according to any one of Embodiments 3 to 12, where
if the first paging manner is performing paging based on the first grouping manner, the group identifier included in the first information is a second group identifier, where the second group identifier is an identifier of a group to which the terminal device belongs in the first grouping manner; or
if the first paging manner is performing paging based on the second grouping manner, the group identifier included in the first information is the first group identifier, where the first group identifier is the identifier of the group to which the terminal device belongs in the second grouping manner.

Embodiment 14: The method according to any one of Embodiments 1 to 13, where the first grouping manner is a grouping manner that is based on an identifier of a terminal device, and the second grouping manner is a grouping manner that is based on an identifier allocated by a core network device.

Embodiment 15: A communication method, applied to a base-station central unit, where the method includes:
receiving a second message from a core network device, where the second message includes information indicating whether a to-be-paged terminal device supports a first grouping manner; and
sending a first message to a base-station distributed unit, where the first message is for determining whether the terminal device supports the first grouping manner and/or determining a paging manner for the terminal device.

Embodiment 16: The method according to Embodiment 15, where the paging manner for the terminal device includes performing paging based on the first grouping manner, performing paging based on the second grouping manner, or performing paging based on a non-grouping manner.

Embodiment 17: The method according to Embodiment 15 or 16, where the second message further includes a first group identifier, where the first group identifier is an identifier of a group to which the terminal device belongs in the second grouping manner, where
the first message includes the information indicating whether the terminal device supports the first grouping manner and the first group identifier.

Embodiment 18: The method according to Embodiment 15 or 16, where the second message further includes a first group identifier, where the first group identifier is an identifier of a group to which the terminal device belongs in the second grouping manner, where
if the base-station distributed unit supports the second grouping manner, the first message includes the first group identifier but does not include the information indicating whether the terminal device supports the first grouping manner; or
if the base-station distributed unit does not support the second grouping manner, the first message includes the information indicating whether the terminal device supports the first grouping manner but does not include the first group identifier.

Embodiment 19: The method according to Embodiment 15 or 16, where the second message further includes a first group identifier, where the first group identifier is an identifier of a group to which the terminal device belongs in the second grouping manner, where
if the base-station distributed unit supports the second grouping manner, the first message includes the first group identifier but does not include the information indicating whether the terminal device supports the first grouping manner;
if the base-station distributed unit does not support the second grouping manner but supports the first grouping manner, the first message includes the information indicating whether the terminal device supports the first grouping manner but does not include the first group identifier; or
if the base-station distributed unit supports neither the second grouping manner nor the first grouping manner, the first message includes neither the information indicating whether the terminal device supports the first grouping manner nor the first group identifier.

Embodiment 20: The method according to Embodiment 15 or 16, where the second message does not include a first group identifier, where the first group identifier is an identifier of a group to which the terminal device belongs in the second grouping manner, where
the first message includes the information indicating whether the terminal device supports the first grouping manner.

Embodiment 21: The method according to Embodiment 15 or 16, where the second message does not include a first group identifier, where the first group identifier is an identifier of a group to which the terminal device belongs in the second grouping manner, where
if the base-station distributed unit supports the first grouping manner, the first message includes the information indicating whether the terminal device supports the first grouping manner; or
if the base-station distributed unit does not support the first grouping manner, the first message does not include the information indicating whether the terminal device supports the first grouping manner.

Embodiment 22: The method according to any one of Embodiments 17 to 21, where
the first message includes a first field, to indicate that the terminal device supports the first grouping manner; or the first message does not include a first field, to indicate that the terminal device does not support the first grouping manner; or
a value of a first field included in the first message is a first value, to indicate that the terminal device supports the first grouping manner; or a value of a first field included in the first message is a second value, to indicate that the terminal device does not support the first grouping manner.

Embodiment 23: The method according to any one of Embodiments 17 to 21, where
the first message includes a terminal-device radio paging information container, where the terminal-device radio paging information container carries the information indicating whether the terminal device supports the first grouping manner.

Embodiment 24: The method according to Embodiment 15 or 16, where the second message further includes a first group identifier, where the first group identifier is an identifier of a group to which the terminal device belongs in the second grouping manner, where
if the base-station distributed unit supports the second grouping manner, the first message includes the first group identifier;
if the base-station distributed unit does not support the second grouping manner but supports the first grouping manner, and the information indicating whether the terminal device supports the first grouping manner indicates that the terminal device supports the first grouping manner, the first message indicates to use the first grouping manner;
if the base-station distributed unit does not support the second grouping manner but supports the first grouping manner, and the information indicating whether the terminal device supports the first grouping manner indicates that the terminal device does not support the first grouping manner, the first message indicates not to use the first grouping manner; or
if the base-station distributed unit supports neither the second grouping manner nor the first grouping manner, the first message indicates not to use the first grouping manner.

Embodiment 25: The method according to Embodiment 24, where if the base-station distributed unit supports the second grouping manner, the first message further indicates not to use the first grouping manner.

Embodiment 26: The method according to Embodiment 15 or 16, where the second message does not include a first group identifier, where the first group identifier is an identifier of a group to which the terminal device belongs in the second grouping manner, where
if the base-station distributed unit supports the first grouping manner, and the information indicating whether the terminal device supports the first grouping manner indicates that the terminal device supports the first grouping manner, the first message indicates to use the first grouping manner;
if the base-station distributed unit supports the first grouping manner, and the information indicating whether the terminal device supports the first grouping manner indicates that the terminal device does not support the first grouping manner, the first message indicates not to use the first grouping manner; or
if the base-station distributed unit does not support the first grouping manner, the first message indicates not to use the first grouping manner.

Embodiment 27: The method according to any one of Embodiments 15 to 26, where the first grouping manner is a grouping manner that is based on an identifier of a terminal device, and the second grouping manner is a grouping manner that is based on an identifier allocated by the core network device.

Embodiment 28: A communication method, applied to a base-station central unit, where the method includes:
determining whether a base-station distributed unit supports a second grouping manner; and
sending first information to the base-station distributed unit, where the first information indicates whether the base-station distributed unit supports the second grouping manner.

Embodiment 29: The method according to Embodiment 28, where
if the first information indicates that the base-station distributed unit supports the second grouping manner, the first information further indicates a maximum group quantity supported by the base-station distributed unit in the second grouping manner;
if the first information indicates that the base-station distributed unit supports the second grouping manner, the method further includes: sending second information to the base-station distributed unit, where the second information indicates a maximum group quantity supported by the base-station distributed unit in the second grouping manner; or
that the first information indicates whether the base-station distributed unit supports the second grouping manner includes: The first information indicates a maximum group quantity supported by the base-station distributed unit in the second grouping manner.

Embodiment 30: The method according to Embodiment 28 or 29, where
the first information further indicates whether the base-station distributed unit supports a first grouping manner; or
the method further includes: sending third information to the base-station distributed unit, where the third information indicates whether the base-station distributed unit supports a first grouping manner.

Embodiment 31: The method according to Embodiment 30, where
if the third information indicates that the base-station distributed unit supports the first grouping manner, the third information further indicates a maximum group quantity supported by the base-station distributed unit in the first grouping manner;
if the third information indicates that the base-station distributed unit supports the first grouping manner, the method further includes: sending fourth information to the base-station distributed unit, where the fourth information indicates a maximum group quantity supported by the base-station distributed unit in the first grouping manner; or
that the third information indicates whether the base-station distributed unit supports a first grouping manner includes: The third information indicates a maximum group quantity supported by the base-station distributed unit in the first grouping manner.

Embodiment 32: The method according to any one of Embodiments 28 to 31, where
a first message includes a first field, to indicate that the base-station distributed unit supports the second grouping manner; or a first message does not include a first field, to indicate that the base-station distributed unit does not support the second grouping manner; or
a value of a first field included in a first message is a first value, to indicate that the base-station distributed unit supports the second grouping manner; or a value of a first field included in a first message is a second value, to indicate that the base-station distributed unit does not support the second grouping manner.

Embodiment 33: The method according to Embodiment 30 or 31, where
a first message includes a second field, to indicate that the base-station distributed unit supports the first grouping manner; or a first message does not include a second field, to indicate that the base-station distributed unit does not support the first grouping manner; or
a value of a second field included in a first message is a first value, to indicate that the base-station distributed unit supports the first grouping manner; or a value of a second field included in a first message is a second value, to indicate that the base-station distributed unit does not support the first grouping manner.

Embodiment 34: The method according to any one of Embodiments 28 to 33, where the determining whether a base-station distributed unit supports a second grouping manner includes:
receiving a second message from a core network device, where the second message indicates whether the base-station distributed unit supports the second grouping manner.

Embodiment 35: The method according to any one of Embodiments 28 to 34, where the first grouping manner is a grouping manner that is based on an identifier of a terminal device, and the second grouping manner is a grouping manner that is based on an identifier allocated by the core network device.

Embodiment 36: A communication method, applied to a base-station distributed unit, where the method includes:
receiving first information from a base-station central unit, where the first information indicates whether the base-station distributed unit supports a second grouping manner.

Embodiment 37: The method according to Embodiment 36, where
if the first information indicates that the base-station distributed unit supports the second grouping manner, the first information further indicates a maximum group quantity supported by the base-station distributed unit in the second grouping manner;
if the first information indicates that the base-station distributed unit supports the second grouping manner, the method further includes: receiving second information from the base-station central unit, where the second information indicates a maximum group quantity supported by the base-station distributed unit in the second grouping manner; or
that the first information indicates whether the base-station distributed unit supports a second grouping manner includes: The first information indicates a maximum group quantity supported by the base-station distributed unit in the second grouping manner.

Embodiment 38: The method according to Embodiment 36 or 37, where
the first information further indicates whether the base-station distributed unit supports a first grouping manner; or
the method further includes: receiving third information from the base-station central unit, where the third information indicates whether the base-station distributed unit supports a first grouping manner.

Embodiment 39: The method according to Embodiment 38, where
if the third information indicates that the base-station distributed unit supports the first grouping manner, the third information further indicates a maximum group quantity supported by the base-station distributed unit in the first grouping manner;
if the third information indicates that the base-station distributed unit supports the first grouping manner, the method further includes: receiving fourth information from the base-station central unit, where the fourth information indicates a maximum group quantity supported by the base-station distributed unit in the first grouping manner; or
that the third information indicates whether the base-station distributed unit supports a first grouping manner includes: The third information indicates a maximum group quantity supported by the base-station distributed unit in the first grouping manner.

Embodiment 40: The method according to any one of Embodiments 36 to 39, where
a first message includes a first field, to indicate that the base-station distributed unit supports the second grouping manner; or a first message does not include a first field, to indicate that the base-station distributed unit does not support the second grouping manner; or
a value of a first field included in a first message is a first value, to indicate that the base-station distributed unit supports the second grouping manner; or a value of a first field included in a first message is a second value, to indicate that the base-station distributed unit does not support the second grouping manner.

Embodiment 41: The method according to Embodiment 38 or 39, where
a first message includes a second field, to indicate that the base-station distributed unit supports the first grouping manner; or a first message does not include a second field, to indicate that the base-station distributed unit does not support the first grouping manner; or
a value of a second field included in a first message is a first value, to indicate that the base-station distributed unit supports the first grouping manner; or a value of a second field included in a first message is a second value, to indicate that the base-station distributed unit does not support the first grouping manner.

Embodiment 42: The method according to any one of Embodiments 36 to 41, where the method further includes:
broadcasting fifth information, where the fifth information indicates one or more of the following: whether the base-station distributed unit supports a grouping manner, a grouping manner supported by the base-station distributed unit, or a maximum group quantity supported by the base-station distributed unit in the grouping manner supported by the base-station distributed unit.

Embodiment 43: The method according to any one of Embodiments 36 to 42, where the first grouping manner is a grouping manner that is based on an identifier of a terminal device, and the second grouping manner is a grouping manner that is based on an identifier allocated by a core network device.

Embodiment 44: A communication method, applied to a base-station central unit, where the method includes:
sending a first message to a base-station distributed unit, where the first message includes first time information, the first time information is for determining time within which an RRC release message is sent to a terminal device, and the RRC release message is for releasing the terminal device from an RRC connected state to an RRC idle state or an RRC inactive state.

Embodiment 45: The method according to Embodiment 44, where the sending a first message to a base-station distributed unit includes:
sending the first message to the base-station distributed unit in a context setup process of the terminal device or in a context modification process of the terminal device.

Embodiment 46: The method according to Embodiment 44 or 45, where the method further includes:
sending the RRC release message to the base-station distributed unit.

Embodiment 47: The method according to Embodiment 46, where
the RRC release message further includes indication information; or
the method further includes: further sending indication information to the base-station distributed unit when sending the RRC release message, where
the indication information indicates to send the RRC release message to the terminal device based on the first time information.

Embodiment 48: The method according to Embodiment 44, where
the first message further includes the RRC release message; or
the method further includes: further sending the RRC release message to the base-station distributed unit when sending the first message.

Embodiment 49: The method according to any one of Embodiments 44 to 48, where
duration indicated by the first time information is the same as first duration; or
duration indicated by the first time information is less than first duration, and the duration indicated by the first time information is available time within which the base-station distributed unit sends the RRC release message to the terminal device, where the first duration is duration that the terminal device waits after the terminal device sends RRC release indication information to the base-station central unit, and the terminal device enters the RRC idle state if the terminal device does not receive the RRC release message when the first duration expires.

Embodiment 50: The method according to Embodiment 49, where when the duration indicated by the first time information is less than the first duration, the duration indicated by the first time information is a difference between the first duration and processing duration of the base-station central unit, where the processing duration of the base-station central unit is duration of processing the RRC release indication information from the terminal device by the base-station central unit, and the RRC release indication information indicates that the terminal device expects to leave the RRC connected state.

Embodiment 51: A communication method, applied to a base-station distributed unit, where the method includes:
receiving a first message from a base-station central unit, where the first message includes first time information, the first time information is for determining time within which an RRC release message is sent to a terminal device, and the RRC release message is for releasing the terminal device from an RRC connected state to an RRC idle state or an RRC inactive state.

Embodiment 52: The method according to Embodiment 51, where the receiving a first message from a base-station central unit includes:
receiving the first message from the base-station central unit in a context setup process of the terminal device or in a context modification process of the terminal device.

Embodiment 53: The method according to Embodiment 51 or 52, where the method further includes:
receiving the RRC release message from the base-station central unit.

Embodiment 54: The method according to Embodiment 53, where the RRC release message further includes indication information, and the indication information indicates to send the RRC release message to the terminal device based on the time information.

Embodiment 55: The method according to Embodiment 51, where the first message further includes the RRC release message.

Embodiment 56: The method according to any one of Embodiments 51 to 55, where
duration indicated by the first time information is the same as first duration; or
duration indicated by the first time information is less than first duration, and the duration indicated by the first time information is available time within which the base-station distributed unit sends the RRC release message to the terminal device, where the first duration is duration that the terminal device waits after the terminal device sends RRC release indication information to the base-station central unit, and the terminal device enters the RRC idle state if the terminal device does not receive the RRC release message when the first duration expires.

Embodiment 57: The method according to Embodiment 56, where when the duration indicated by the first time information is less than the first duration, the duration indicated by the first time information is a difference between the first duration and processing duration of the base-station central unit, where the processing duration of the base-station central unit is duration of processing the RRC release indication information from the terminal device by the base-station central unit, and the RRC release indication information indicates that the terminal device expects to leave the RRC connected state.

Embodiment 58: The method according to any one of Embodiments 51 to 57, where the method further includes:
sending the RRC release message to the terminal device based on the first time information before the first duration expires, where the first duration is the duration that the terminal device waits after the terminal device sends the RRC release indication information to the base-station central unit, and the terminal device enters the RRC idle state if the terminal device does not receive the RRC release message when the first duration expires.

Embodiment 59: The method according to Embodiment 58, where the duration indicated by the first time information is the same as the first duration;
the method further includes: determining second time information based on the first time information and estimated processing duration of the base-station central unit; and
the sending the RRC release message to the terminal device based on the first time information before the first duration expires includes: sending the RRC release message to the terminal device based on the second time information before the first duration expires.

Embodiment 60: The method according to Embodiment 59, where duration indicated by the second time information is the difference between the first duration and the processing duration of the base-station central unit.

Embodiment 61: A communication apparatus, including:
a transceiver unit (or a receiving unit), configured to receive a first message from a base-station central unit, where the first message is for determining whether a to-be-paged terminal device supports a first grouping manner and/or determining a paging manner for the to-be-paged terminal device; and
a processing unit, configured to page the terminal device in a first paging manner, where the first paging manner is determined based on the first message.

Embodiment 62: The communication apparatus according to Embodiment 61, where the first paging manner is performing paging based on the first grouping manner, performing paging based on a second grouping manner, or performing paging based on a non-grouping manner.

Embodiment 63: The communication apparatus according to Embodiment 61 or 62, where the first paging manner is performing paging based on the first grouping manner or performing paging based on the second grouping manner, and the processing unit is configured to page the terminal device in the first paging manner in the following manner:
generating first information, where the first information includes a group identifier determined based on the first message, and the first information indicates the terminal device corresponding to the group identifier to receive a paging message; and
sending the first information by using the transceiver unit (or a sending unit).

Embodiment 64: The communication apparatus according to Embodiment 63, where the first information is paging control information or a wake-up signal.

Embodiment 65: The communication apparatus according to Embodiment 63 or 64, where
the first message includes a first group identifier; and if the communication apparatus supports the second grouping manner, the first paging manner is performing paging based on the second grouping manner, where the first group identifier is an identifier of a group to which the terminal device belongs in the second grouping manner;
the first message includes a first group identifier and information indicating whether the terminal device supports the first grouping manner, where the first group identifier is an identifier of a group to which the terminal device belongs in the second grouping manner; and if the communication apparatus does not support the second grouping manner but supports the first grouping manner, and the information indicating whether the terminal device supports the first grouping manner indicates that the terminal device supports the first grouping manner, the first paging manner is performing paging based on the first grouping manner;
the first message includes a first group identifier and information indicating whether the terminal device supports the first grouping manner, where the first group identifier is an identifier of a group to which the terminal device belongs in the second grouping manner; and if the communication apparatus does not support the second grouping manner but supports the first grouping manner, and the information indicating whether the terminal device supports the first grouping manner indicates that the terminal device does not support the first grouping manner, the first paging manner is performing paging based on the non-grouping manner; or
if the communication apparatus supports neither the second grouping manner nor the first grouping manner, the first paging manner is performing paging based on the non-grouping manner.

Embodiment 66: The communication apparatus according to Embodiment 63 or 64, where
the first message includes information indicating whether the terminal device supports the first grouping manner but does not include a first group identifier, where the first group identifier is an identifier of a group to which the terminal device belongs in the second grouping manner; and if the communication apparatus supports the first grouping manner, and the information indicating whether the terminal device supports the first grouping manner indicates that the terminal device supports the first grouping manner, the first paging manner is performing paging based on the first grouping manner;
the first message includes information indicating whether the terminal device supports the first grouping manner but does not include a first group identifier, where the first group identifier is an identifier of a group to which the terminal device belongs in the second grouping manner; and if the communication apparatus supports the first grouping manner, and the information indicating whether the terminal device supports the first grouping manner indicates that the terminal device does not support the first grouping manner, the first paging manner is performing paging based on the non-grouping manner; or
the first message does not include a first group identifier, where the first group identifier is an identifier of a group to which the terminal device belongs in the second grouping manner; and if the communication apparatus does not support the first grouping manner, the first paging manner is performing paging based on the non-grouping manner.

Embodiment 67: The communication apparatus according to Embodiment 63 or 64, where if the first message includes neither information indicating whether the terminal device supports the first grouping manner nor a first group identifier, the first paging manner is performing paging based on the non-grouping manner, where the first group identifier is an identifier of a group to which the terminal device belongs in the second grouping manner.

Embodiment 68: The communication apparatus according to any one of Embodiments 65 to 67, where
the first message includes a first field, to indicate that the terminal device supports the first grouping manner; or the first message does not include a first field, to indicate that the terminal device does not support the first grouping manner; or
a value of a first field included in the first message is a first value, to indicate that the terminal device supports the first grouping manner; or a value of a first field included in the first message is a second value, to indicate that the terminal device does not support the first grouping manner.

Embodiment 69: The communication apparatus according to Embodiment 65 or 66, where
the first message includes a terminal-device radio paging information container, where the terminal-device radio paging information container carries the information indicating whether the terminal device supports the first grouping manner.

Embodiment 70: The communication apparatus according to Embodiment 63 or 64, where
the first message includes a first group identifier, where the first group identifier is an identifier of a group to which the terminal device belongs in the second grouping manner; and if the communication apparatus supports the second grouping manner, the first paging manner is performing paging based on the second grouping manner;
if the communication apparatus does not support the second grouping manner but supports the first grouping manner, and the first message further indicates to use the first grouping manner, the first paging manner is performing paging based on the first grouping manner;
if the communication apparatus does not support the second grouping manner but supports the first grouping manner, and the first message further indicates not to use the first grouping manner, the first paging manner is performing paging based on the non-grouping manner; or
if the communication apparatus supports neither the second grouping manner nor the first grouping manner, the first paging manner is performing paging based on the non-grouping manner.

Embodiment 71: The communication apparatus according to Embodiment 63 or 64, where the first message does not include a first group identifier, where the first group identifier is an identifier of a group to which the terminal device belongs in the second grouping manner, where
if the communication apparatus supports the first grouping manner, and the first message further indicates to use the first grouping manner, the first paging manner is performing paging based on the first grouping manner;
if the communication apparatus supports the first grouping manner, and the first message further indicates not to use the first grouping manner, the first paging manner is performing paging based on the non-grouping manner;
if the first message further indicates not to use the first grouping manner, the first paging manner is performing paging based on the non-grouping manner; or
if the communication apparatus does not support the first grouping manner, the first paging manner is performing paging based on the non-grouping manner.

Embodiment 72: The communication apparatus according to Embodiment 70 or 71, where
the first message includes a first field, to indicate to use the first grouping manner; or the first message does not include a first field, to indicate not to use the first grouping manner; or
a value of a first field included in the first message is a first value, to indicate to use the first grouping manner; or a value of a first field included in the first message is a second value, to indicate not to use the first grouping manner.

Embodiment 73: The communication apparatus according to any one of Embodiments 63 to 72, where
if the first paging manner is performing paging based on the first grouping manner, the group identifier included in the first information is a second group identifier, where the second group identifier is an identifier of a group to which the terminal device belongs in the first grouping manner; or
if the first paging manner is performing paging based on the second grouping manner, the group identifier included in the first information is the first group identifier, where the first group identifier is the identifier of the group to which the terminal device belongs in the second grouping manner.

Embodiment 74: The communication apparatus according to any one of Embodiments 61 to 73, where the first grouping manner is a grouping manner that is based on an identifier of a terminal device, and the second grouping manner is a grouping manner that is based on an identifier allocated by a core network device.

Embodiment 75: A communication apparatus, including:
a transceiver unit (or a receiving unit), configured to receive a second message from a core network device, where the second message includes information indicating whether a to-be-paged terminal device supports a first grouping manner, where
the transceiver unit (or a sending unit) is further configured to send a first message to a base-station distributed unit, where the first message is for determining whether the terminal device supports the first grouping manner and/or determining a paging manner for the terminal device.

Embodiment 76: The communication apparatus according to Embodiment 75, where the paging manner for the terminal device includes performing paging based on the first grouping manner, performing paging based on the second grouping manner, or performing paging based on a non-grouping manner.

Embodiment 77: The communication apparatus according to Embodiment 75 or 76, where the second message further includes a first group identifier, where the first group identifier is an identifier of a group to which the terminal device belongs in the second grouping manner, where
the first message includes the information indicating whether the terminal device supports the first grouping manner and the first group identifier.

Embodiment 78: The communication apparatus according to Embodiment 75 or 76, where the second message further includes a first group identifier, where the first group identifier is an identifier of a group to which the terminal device belongs in the second grouping manner, where
if the base-station distributed unit supports the second grouping manner, the first message includes the first group identifier but does not include the information indicating whether the terminal device supports the first grouping manner; or
if the base-station distributed unit does not support the second grouping manner, the first message includes the information indicating whether the terminal device supports the first grouping manner but does not include the first group identifier.

Embodiment 79: The communication apparatus according to Embodiment 75 or 76, where the second message further includes a first group identifier, where the first group identifier is an identifier of a group to which the terminal device belongs in the second grouping manner, where
if the base-station distributed unit supports the second grouping manner, the first message includes the first group identifier but does not include the information indicating whether the terminal device supports the first grouping manner;
if the base-station distributed unit does not support the second grouping manner but supports the first grouping manner, the first message includes the information indicating whether the terminal device supports the first grouping manner but does not include the first group identifier; or
if the base-station distributed unit supports neither the second grouping manner nor the first grouping manner, the first message includes neither the information indicating whether the terminal device supports the first grouping manner nor the first group identifier.

Embodiment 80: The communication apparatus according to Embodiment 75 or 76, where the second message does not include a first group identifier, where the first group identifier is an identifier of a group to which the terminal device belongs in the second grouping manner, where
the first message includes the information indicating whether the terminal device supports the first grouping manner.

Embodiment 81: The communication apparatus according to Embodiment 75 or 76, where the second message does not include a first group identifier, where the first group identifier is an identifier of a group to which the terminal device belongs in the second grouping manner, where
if the base-station distributed unit supports the first grouping manner, the first paging message includes the information indicating whether the terminal device supports the first grouping manner; or
if the base-station distributed unit does not support the first grouping manner, the first paging message does not include the information indicating whether the terminal device supports the first grouping manner.

Embodiment 82: The communication apparatus according to any one of Embodiments 77 to 81, where
the first message includes a first field, to indicate that the terminal device supports the first grouping manner; or the first message does not include a first field, to indicate that the terminal device does not support the first grouping manner; or
a value of a first field included in the first message is a first value, to indicate that the terminal device supports the first grouping manner; or a value of a first field included in the first message is a second value, to indicate that the terminal device does not support the first grouping manner.

Embodiment 83: The communication apparatus according to any one of Embodiments 77 to 81, where
the first message includes a terminal-device radio paging information container, where the terminal-device radio paging information container carries the information indicating whether the terminal device supports the first grouping manner.

Embodiment 84: The communication apparatus according to Embodiment 75 or 76, where the second message further includes a first group identifier, where the first group identifier is an identifier of a group to which the terminal device belongs in the second grouping manner, where
if the base-station distributed unit supports the second grouping manner, the first message includes the first group identifier;
if the base-station distributed unit does not support the second grouping manner but supports the first grouping manner, and the information indicating whether the terminal device supports the first grouping manner indicates that the terminal device supports the first grouping manner, the first message indicates to use the first grouping manner;
if the base-station distributed unit does not support the second grouping manner but supports the first grouping manner, and the information indicating whether the terminal device supports the first grouping manner indicates that the terminal device does not support the first grouping manner, the first message indicates not to use the first grouping manner; or
if the base-station distributed unit supports neither the second grouping manner nor the first grouping manner, the first message indicates not to use the first grouping manner.

Embodiment 85: The communication apparatus according to Embodiment 84, where if the base-station distributed unit supports the second grouping manner, the first message further indicates not to use the first grouping manner.

Embodiment 86: The communication apparatus according to Embodiment 75 or 76, where the second message does not include a first group identifier, where the first group identifier is an identifier of a group to which the terminal device belongs in the second grouping manner, where
if the base-station distributed unit supports the first grouping manner, and the information indicating whether the terminal device supports the first grouping manner indicates that the terminal device supports the first grouping manner, the first message indicates to use the first grouping manner;
if the base-station distributed unit supports the first grouping manner, and the information indicating whether the terminal device supports the first grouping manner indicates that the terminal device does not support the first grouping manner, the first message indicates not to use the first grouping manner; or
if the base-station distributed unit does not support the first grouping manner, the first message indicates not to use the first grouping manner.

Embodiment 87: The communication apparatus according to any one of Embodiments 75 to 86, where the first grouping manner is a grouping manner that is based on an identifier of a terminal device, and the second grouping manner is a grouping manner that is based on an identifier allocated by the core network device.

Embodiment 88: A communication apparatus, including:
a processing unit, configured to determine whether a base-station distributed unit supports a second grouping manner; and
a transceiver unit (or a sending unit), configured to send first information to the base-station distributed unit, where the first information indicates whether the base-station distributed unit supports the second grouping manner.

Embodiment 89: The communication apparatus according to Embodiment 88, where
if the first information indicates that the base-station distributed unit supports the second grouping manner, the first information further indicates a maximum group quantity supported by the base-station distributed unit in the second grouping manner;
if the first information indicates that the base-station distributed unit supports the second grouping manner, the transceiver unit (or the sending unit) is further configured to send second information to the base-station distributed unit, where the second information indicates a maximum group quantity supported by the base-station distributed unit in the second grouping manner; or
that the first information indicates whether the base-station distributed unit supports the second grouping manner includes: The first information indicates a maximum group quantity supported by the base-station distributed unit in the second grouping manner.

Embodiment 90: The communication apparatus according to Embodiment 88 or 89, where
the first information further indicates whether the base-station distributed unit supports a first grouping manner; or
the transceiver unit (or the sending unit) is further configured to send third information to the base-station distributed unit, where the third information indicates whether the base-station distributed unit supports a first grouping manner.

Embodiment 91: The communication apparatus according to Embodiment 90, where
if the third information indicates that the base-station distributed unit supports the first grouping manner, the third information further indicates a maximum group quantity supported by the base-station distributed unit in the first grouping manner;
if the third information indicates that the base-station distributed unit supports the first grouping manner, the transceiver unit (or the sending unit) is further configured to send fourth information to the base-station distributed unit, where the fourth information indicates a maximum group quantity supported by the base-station distributed unit in the first grouping manner; or
that the third information indicates whether the base-station distributed unit supports a first grouping manner includes: The third information indicates a maximum group quantity supported by the base-station distributed unit in the first grouping manner.

Embodiment 92: The communication apparatus according to any one of Embodiments 88 to 91, where
a first message includes a first field, to indicate that the base-station distributed unit supports the second grouping manner; or a first message does not include a first field, to indicate that the base-station distributed unit does not support the second grouping manner; or
a value of a first field included in a first message is a first value, to indicate that the base-station distributed unit supports the second grouping manner; or a value of a first field included in a first message is a second value, to indicate that the base-station distributed unit does not support the second grouping manner.

Embodiment 93: The communication apparatus according to Embodiment 90 or 91, where
a first message includes a second field, to indicate that the base-station distributed unit supports the first grouping manner; or a first message does not include a second field, to indicate that the base-station distributed unit does not support the first grouping manner; or
a value of a second field included in a first message is a first value, to indicate that the base-station distributed unit supports the first grouping manner; or a value of a second field included in a first message is a second value, to indicate that the base-station distributed unit does not support the first grouping manner.

Embodiment 94: The communication apparatus according to any one of Embodiments 88 to 93, where the processing unit is configured to determine, in the following manner, whether the base-station distributed unit supports the second grouping manner:
receiving a second message from a core network device by using the transceiver unit (or a receiving unit), where the second message indicates whether the base-station distributed unit supports the second grouping manner.

Embodiment 95: The communication apparatus according to any one of Embodiments 88 to 94, where the first grouping manner is a grouping manner that is based on an identifier of a terminal device, and the second grouping manner is a grouping manner that is based on an identifier allocated by the core network device.

Embodiment 96: A communication apparatus, including:
a transceiver unit (or a receiving unit), configured to receive first information from a base-station central unit, where the first information indicates whether the communication apparatus supports a second grouping manner.

Embodiment 97: The communication apparatus according to Embodiment 96, where
if the first information indicates that the communication apparatus supports the second grouping manner, the first information further indicates a maximum group quantity supported by the communication apparatus in the second grouping manner;
if the first information indicates that the communication apparatus supports the second grouping manner, the transceiver unit (or the receiving unit) is further configured to receive second information from the base-station central unit, where the second information indicates a maximum group quantity supported by the communication apparatus in the second grouping manner; or
that the first information indicates whether the communication apparatus supports a second grouping manner includes: The first information indicates a maximum group quantity supported by the communication apparatus in the second grouping manner.

Embodiment 98: The communication apparatus according to Embodiment 96 or 97, where
the first information further indicates whether the communication apparatus supports a first grouping manner; or
the transceiver unit (or the receiving unit) is further configured to receive third information from the base-station central unit, where the third information indicates whether the communication apparatus supports a first grouping manner.

Embodiment 99: The communication apparatus according to Embodiment 98, where
if the third information indicates that the communication apparatus supports the first grouping manner, the third information further indicates a maximum group quantity supported by the communication apparatus in the first grouping manner;
if the third information indicates that the communication apparatus supports the first grouping manner, the transceiver unit (or the receiving unit) is further configured to receive fourth information from the base-station central unit, where the fourth information indicates a maximum group quantity supported by the communication apparatus in the first grouping manner; or
that the third information indicates whether the communication apparatus supports a first grouping manner includes: The third information indicates a maximum group quantity supported by the communication apparatus in the first grouping manner.

Embodiment 100: The communication apparatus according to any one of Embodiments 96 to 99, where
a first message includes a first field, to indicate that the communication apparatus supports the second grouping manner; or a first message does not include a first field, to indicate that the communication apparatus does not support the second grouping manner; or
a value of a first field included in a first message is a first value, to indicate that the communication apparatus supports the second grouping manner; or a value of a first field included in a first message is a second value, to indicate that the communication apparatus does not support the second grouping manner.

Embodiment 101: The communication apparatus according to Embodiment 98 or 99, where
a first message includes a second field, to indicate that the communication apparatus supports the first grouping manner; or a first message does not include a second field, to indicate that the communication apparatus does not support the first grouping manner; or
a value of a second field included in a first message is a first value, to indicate that the communication apparatus supports the first grouping manner; or a value of a second field included in a first message is a second value, to indicate that the communication apparatus does not support the first grouping manner.

Embodiment 102: The communication apparatus according to any one of Embodiments 96 to 101, where the transceiver unit (or a sending unit) is further configured to broadcast fifth information, where the fifth information indicates one or more of the following: whether the communication apparatus supports a grouping manner, a grouping manner supported by the communication apparatus, or a maximum group quantity supported by the communication apparatus in the grouping manner supported by the communication apparatus.

Embodiment 103: The communication apparatus according to any one of Embodiments 96 to 102, where the first grouping manner is a grouping manner that is based on an identifier of a terminal device, and the second grouping manner is a grouping manner that is based on an identifier allocated by a core network device.

Embodiment 104: A communication apparatus, including:
a transceiver unit (or a sending unit), configured to send a first message to a base-station distributed unit, where the first message includes first time information, the first time information is for determining time within which an RRC release message is sent to a terminal device, and the RRC release message is for releasing the terminal device from an RRC connected state to an RRC idle state or an RRC inactive state.

Embodiment 105: The communication apparatus according to Embodiment 104, where the transceiver unit is configured to send the first message to the base-station distributed unit in the following manner:
sending the first message to the base-station distributed unit in a context setup process of the terminal device or in a context modification process of the terminal device.

Embodiment 106: The communication apparatus according to Embodiment 104 or 105, where the transceiver unit (or the sending unit) is further configured to send the RRC release message to the base-station distributed unit.

Embodiment 107: The communication apparatus according to Embodiment 106, where
the RRC release message further includes indication information; or
the transceiver unit (or the sending unit) is further configured to send indication information to the base-station distributed unit when sending the RRC release message, where
the indication information indicates to send the RRC release message to the terminal device based on the first time information.

Embodiment 108: The communication apparatus according to Embodiment 104, where
the first message further includes the RRC release message; or
the transceiver unit (or the sending unit) is further configured to send the RRC release message to the base-station distributed unit when sending the first message.

Embodiment 109: The communication apparatus according to any one of Embodiments 104 to 108, where
duration indicated by the first time information is the same as first duration; or
duration indicated by the first time information is less than first duration, and the duration indicated by the first time information is available time within which the base-station distributed unit sends the RRC release message to the terminal device, where the first duration is duration that the terminal device waits after the terminal device sends RRC release indication information to the communication apparatus, and the terminal device enters the RRC idle state if the terminal device does not receive the RRC release message when the first duration expires.

Embodiment 110: The communication apparatus according to Embodiment 109, where when the duration indicated by the first time information is less than the first duration, the duration indicated by the first time information is a difference between the first duration and processing duration of the communication apparatus, where the processing duration of the communication apparatus is duration of processing the RRC release indication information from the terminal device by the communication apparatus, and the RRC release indication information indicates that the terminal device expects to leave the RRC connected state.

Embodiment 111: A communication apparatus, including:
a transceiver unit (or a receiving unit), configured to receive a first message from a base-station central unit, where the first message includes first time information, the first time information is for determining time within which an RRC release message is sent to a terminal device, and the RRC release message is for releasing the terminal device from an RRC connected state to an RRC idle state or an RRC inactive state.

Embodiment 112: The communication apparatus according to Embodiment 111, where the transceiver unit is configured to receive the first message from the base-station central unit in the following manner:
receiving the first message from the base-station central unit in a context setup process of the terminal device or in a context modification process of the terminal device.

Embodiment 113: The communication apparatus according to Embodiment 111 or 112, where the transceiver unit (or the receiving unit) is further configured to receive the RRC release message from the base-station central unit.

Embodiment 114: The communication apparatus according to Embodiment 113, where the RRC release message further includes indication information, and the indication information indicates to send the RRC release message to the terminal device based on the time information.

Embodiment 115: The communication apparatus according to Embodiment 111, where the first message further includes the RRC release message.

Embodiment 116: The communication apparatus according to any one of Embodiments 111 to 115, where
duration indicated by the first time information is the same as first duration; or
duration indicated by the first time information is less than first duration, and the duration indicated by the first time information is available time within which the communication apparatus sends the RRC release message to the terminal device, where the first duration is duration that the terminal device waits after the terminal device sends RRC release indication information to the base-station central unit, and the terminal device enters the RRC idle state if the terminal device does not receive the RRC release message when the first duration expires.

Embodiment 117: The communication apparatus according to Embodiment 116, where when the duration indicated by the first time information is less than the first duration, the duration indicated by the first time information is a difference between the first duration and processing duration of the base-station central unit, where the processing duration of the base-station central unit is duration of processing the RRC release indication information from the terminal device by the base-station central unit, and the RRC release indication information indicates that the terminal device expects to leave the RRC connected state.

Embodiment 118: The communication apparatus according to any one of Embodiments 111 to 117, where the transceiver unit (or a sending unit) is configured to send the RRC release message to the terminal device based on the first time information before the first duration expires, where the first duration is the duration that the terminal device waits after the terminal device sends the RRC release indication information to the base-station central unit, and the terminal device enters the RRC idle state if the terminal device does not receive the RRC release message when the first duration expires.

Embodiment 119: The communication apparatus according to Embodiment 118, where the duration indicated by the first time information is the same as the first duration;
the communication apparatus further includes a processing unit, configured to determine second time information based on the first time information and estimated processing duration of the base-station central unit; and
the transceiver unit is configured to send, in the following manner, the RRC release message to the terminal device based on the first time information before the first duration expires: sending the RRC release message to the terminal device based on the second time information before the first duration expires.

Embodiment 120: The communication apparatus according to Embodiment 119, where duration indicated by the second time information is the difference between the first duration and the processing duration of the base-station central unit.

Embodiment 121: An apparatus, including a unit configured to perform the method described in any embodiment of this application.

Embodiment 122: A computer program product, where the computer program product includes a computer program; and when the computer program is run on a computer, the computer is enabled to perform the method according to any one of Embodiments 1 to 14, the computer is enabled to perform the method according to any one of Embodiments 15 to 27, the computer is enabled to perform the method according to any one of Embodiments 28 to 35, the computer is enabled to perform the method according to any one of Embodiments 36 to 43, the computer is enabled to perform the method according to any one of Embodiments 44 to 50, or the computer is enabled to perform the method according to any one of Embodiments 51 to 60.

## Claims

1. A communication method, applied to a base-station distributed unit, wherein the method comprises:
receiving a first message from a base-station central unit, wherein the first message is for determining whether a to-be-paged terminal device supports a first grouping manner and/or determining a paging manner for the to-be-paged terminal device; and
paging the terminal device in a first paging manner, wherein the first paging manner is determined based on the first message.

2. The method according to claim 1, wherein the first paging manner is performing paging based on the first grouping manner, performing paging based on a second grouping manner, or performing paging based on a non-grouping manner.

3. The method according to claim 1 or 2, wherein the first grouping manner is a grouping manner that is based on an identifier of a terminal device, and the second grouping manner is a grouping manner that is based on an identifier allocated by a core network device.

4. The method according to any one of claims 1 to 3, wherein if the terminal device supports the first grouping manner and/or the second grouping manner, the terminal device supports receiving of a paging early indication PEI from the base-station distributed unit.

5. The method according to any one of claims 1 to 4, wherein the first paging manner is performing paging based on the first grouping manner or performing paging based on the second grouping manner, and the paging the terminal device in a first paging manner comprises:
generating first information, wherein the first information comprises a group identifier, and the first information indicates the terminal device corresponding to the group identifier to receive a paging message; and
sending the first information.

6. The method according to claim 5, wherein the first information is the PEI.

7. The method according to claim 5 or 6, wherein
the first message comprises a first group identifier; and if the base-station distributed unit supports the second grouping manner, the first paging manner is performing paging based on the second grouping manner, wherein the first group identifier is an identifier of a group to which the terminal device belongs in the second grouping manner;
the first message comprises a first group identifier and information indicating whether the terminal device supports the first grouping manner, wherein the first group identifier is an identifier of a group to which the terminal device belongs in the second grouping manner; and if the base-station distributed unit does not support the second grouping manner but supports the first grouping manner, and the information indicating whether the terminal device supports the first grouping manner indicates that the terminal device supports the first grouping manner, the first paging manner is performing paging based on the first grouping manner;
the first message comprises a first group identifier and information indicating whether the terminal device supports the first grouping manner, wherein the first group identifier is an identifier of a group to which the terminal device belongs in the second grouping manner; and if the base-station distributed unit does not support the second grouping manner but supports the first grouping manner, and the information indicating whether the terminal device supports the first grouping manner indicates that the terminal device does not support the first grouping manner, the first paging manner is performing paging based on the non-grouping manner; or
if the base-station distributed unit supports neither the second grouping manner nor the first grouping manner, the first paging manner is performing paging based on the non-grouping manner.

8. The method according to claim 5 or 6, wherein
the first message comprises information indicating whether the terminal device supports the first grouping manner but does not comprise a first group identifier, wherein the first group identifier is an identifier of a group to which the terminal device belongs in the second grouping manner; and if the base-station distributed unit supports the first grouping manner, and the information indicating whether the terminal device supports the first grouping manner indicates that the terminal device supports the first grouping manner, the first paging manner is performing paging based on the first grouping manner;
the first message comprises information indicating whether the terminal device supports the first grouping manner but does not comprise a first group identifier, wherein the first group identifier is an identifier of a group to which the terminal device belongs in the second grouping manner; and if the base-station distributed unit supports the first grouping manner, and the information indicating whether the terminal device supports the first grouping manner indicates that the terminal device does not support the first grouping manner, the first paging manner is performing paging based on the non-grouping manner; or
the first message does not comprise a first group identifier, wherein the first group identifier is an identifier of a group to which the terminal device belongs in the second grouping manner; and if the base-station distributed unit does not support the first grouping manner, the first paging manner is performing paging based on the non-grouping manner.

9. The method according to claim 5 or 6, wherein if the first message comprises neither information indicating whether the terminal device supports the first grouping manner nor a first group identifier, the first paging manner is performing paging based on the non-grouping manner, wherein the first group identifier is an identifier of a group to which the terminal device belongs in the second grouping manner.

10. The method according to any one of claims 7 to 9, wherein
the first message comprises a first field, to indicate that the terminal device supports the first grouping manner; or the first message does not comprise a first field, to indicate that the terminal device does not support the first grouping manner; or
a value of a first field comprised in the first message is a first value, to indicate that the terminal device supports the first grouping manner; or a value of a first field comprised in the first message is a second value, to indicate that the terminal device does not support the first grouping manner.

11. The method according to claim 7 or 8, wherein
the first message comprises a terminal-device radio paging information container, wherein the terminal-device radio paging information container carries the information indicating whether the terminal device supports the first grouping manner.

12. The method according to claim 5 or 6, wherein
the first message comprises a first group identifier, wherein the first group identifier is an identifier of a group to which the terminal device belongs in the second grouping manner; and if the base-station distributed unit supports the second grouping manner, the first paging manner is performing paging based on the second grouping manner;
if the base-station distributed unit does not support the second grouping manner but supports the first grouping manner, and the first message further indicates to use the first grouping manner, the first paging manner is performing paging based on the first grouping manner;
if the base-station distributed unit does not support the second grouping manner but supports the first grouping manner, and the first message further indicates not to use the first grouping manner, the first paging manner is performing paging based on the non-grouping manner; or
if the base-station distributed unit supports neither the second grouping manner nor the first grouping manner, the first paging manner is performing paging based on the non-grouping manner.

13. The method according to claim 5 or 6, wherein the first message does not comprise a first group identifier, wherein the first group identifier is an identifier of a group to which the terminal device belongs in the second grouping manner, wherein
if the base-station distributed unit supports the first grouping manner, and the first message further indicates to use the first grouping manner, the first paging manner is performing paging based on the first grouping manner;
if the base-station distributed unit supports the first grouping manner, and the first message further indicates not to use the first grouping manner, the first paging manner is performing paging based on the non-grouping manner;
if the first message further indicates not to use the first grouping manner, the first paging manner is performing paging based on the non-grouping manner; or
if the base-station distributed unit does not support the first grouping manner, the first paging manner is performing paging based on the non-grouping manner.

14. The method according to claim 12 or 13, wherein
the first message comprises a first field, to indicate to use the first grouping manner; or the first message does not comprise a first field, to indicate not to use the first grouping manner; or
a value of a first field comprised in the first message is a first value, to indicate to use the first grouping manner; or a value of a first field comprised in the first message is a second value, to indicate not to use the first grouping manner.

15. The method according to any one of claims 5 to 14, wherein
if the first paging manner is performing paging based on the first grouping manner, the group identifier comprised in the first information is a second group identifier, wherein the second group identifier is an identifier of a group to which the terminal device belongs in the first grouping manner; or
if the first paging manner is performing paging based on the second grouping manner, the group identifier comprised in the first information is the first group identifier, wherein the first group identifier is the identifier of the group to which the terminal device belongs in the second grouping manner.

16. A communication method, applied to a base-station central unit, wherein the method comprises:
receiving a second message from a core network device, wherein the second message comprises information indicating whether a to-be-paged terminal device supports a first grouping manner; and
sending a first message to a base-station distributed unit, wherein the first message is for determining whether the terminal device supports the first grouping manner and/or determining a paging manner for the terminal device.

17. The method according to claim 16, wherein the first grouping manner is a grouping manner that is based on an identifier of a terminal device, and a second grouping manner is a grouping manner that is based on an identifier allocated by the core network device.

18. The method according to claim 16 or 17, wherein the paging manner for the terminal device comprises performing paging based on the first grouping manner, performing paging based on the second grouping manner, or performing paging based on a non-grouping manner.

19. The method according to any one of claims 16 to 18, wherein the second message further comprises a first group identifier, wherein the first group identifier is an identifier of a group to which the terminal device belongs in the second grouping manner, wherein
the first message comprises the information indicating whether the terminal device supports the first grouping manner and the first group identifier.

20. The method according to any one of claims 16 to 18, wherein the second message further comprises a first group identifier, wherein the first group identifier is an identifier of a group to which the terminal device belongs in the second grouping manner, wherein
if the base-station distributed unit supports the second grouping manner, the first message comprises the first group identifier but does not comprise the information indicating whether the terminal device supports the first grouping manner; or
if the base-station distributed unit does not support the second grouping manner, the first message comprises the information indicating whether the terminal device supports the first grouping manner but does not comprise the first group identifier.

21. The method according to any one of claims 16 to 18, wherein the second message further comprises a first group identifier, wherein the first group identifier is an identifier of a group to which the terminal device belongs in the second grouping manner, wherein
if the base-station distributed unit supports the second grouping manner, the first message comprises the first group identifier but does not comprise the information indicating whether the terminal device supports the first grouping manner;
if the base-station distributed unit does not support the second grouping manner but supports the first grouping manner, the first message comprises the information indicating whether the terminal device supports the first grouping manner but does not comprise the first group identifier; or
if the base-station distributed unit supports neither the second grouping manner nor the first grouping manner, the first message comprises neither the information indicating whether the terminal device supports the first grouping manner nor the first group identifier.

22. The method according to any one of claims 16 to 18, wherein the second message does not comprise a first group identifier, wherein the first group identifier is an identifier of a group to which the terminal device belongs in the second grouping manner, wherein
the first message comprises the information indicating whether the terminal device supports the first grouping manner.

23. The method according to any one of claims 16 to 18, wherein the second message does not comprise a first group identifier, wherein the first group identifier is an identifier of a group to which the terminal device belongs in the second grouping manner, wherein
if the base-station distributed unit supports the first grouping manner, the first message comprises the information indicating whether the terminal device supports the first grouping manner; or
if the base-station distributed unit does not support the first grouping manner, the first message does not comprise the information indicating whether the terminal device supports the first grouping manner.

24. The method according to any one of claims 19 to 23, wherein
the first message comprises a first field, to indicate that the terminal device supports the first grouping manner; or the first message does not comprise a first field, to indicate that the terminal device does not support the first grouping manner; or
a value of a first field comprised in the first message is a first value, to indicate that the terminal device supports the first grouping manner; or a value of a first field comprised in the first message is a second value, to indicate that the terminal device does not support the first grouping manner.

25. The method according to any one of claims 19 to 23, wherein
the first message comprises a terminal-device radio paging information container, wherein the terminal-device radio paging information container carries the information indicating whether the terminal device supports the first grouping manner.

26. The method according to any one of claims 16 to 18, wherein the second message further comprises a first group identifier, wherein the first group identifier is an identifier of a group to which the terminal device belongs in the second grouping manner, wherein
if the base-station distributed unit supports the second grouping manner, the first message comprises the first group identifier;
if the base-station distributed unit does not support the second grouping manner but supports the first grouping manner, and the information indicating whether the terminal device supports the first grouping manner indicates that the terminal device supports the first grouping manner, the first message indicates to use the first grouping manner;
if the base-station distributed unit does not support the second grouping manner but supports the first grouping manner, and the information indicating whether the terminal device supports the first grouping manner indicates that the terminal device does not support the first grouping manner, the first message indicates not to use the first grouping manner; or
if the base-station distributed unit supports neither the second grouping manner nor the first grouping manner, the first message indicates not to use the first grouping manner.

27. The method according to claim 26, wherein if the base-station distributed unit supports the second grouping manner, the first message further indicates not to use the first grouping manner.

28. The method according to any one of claims 16 to 18, wherein the second message does not comprise a first group identifier, wherein the first group identifier is an identifier of a group to which the terminal device belongs in the second grouping manner, wherein
if the base-station distributed unit supports the first grouping manner, and the information indicating whether the terminal device supports the first grouping manner indicates that the terminal device supports the first grouping manner, the first message indicates to use the first grouping manner;
if the base-station distributed unit supports the first grouping manner, and the information indicating whether the terminal device supports the first grouping manner indicates that the terminal device does not support the first grouping manner, the first message indicates not to use the first grouping manner; or
if the base-station distributed unit does not support the first grouping manner, the first message indicates not to use the first grouping manner.

29. A communication device, comprising:
one or more processors;
one or more memories; and
one or more computer programs, wherein the one or more computer programs are stored in the one or more memories, and the one or more computer programs comprise instructions; and when the instructions are executed by the one or more processors in the communication device, the communication device is enabled to perform the method according to any one of claims 1 to 15, or the communication device is enabled to perform the method according to any one of claims 16 to 28.

30. A computer-readable storage medium, wherein the computer-readable storage medium is configured to store a computer program; and when the computer program is run on a computer, the computer is enabled to perform the method according to any one of claims 1 to 15, or the computer is enabled to perform the method according to any one of claims 16 to 28.

31. A chip, comprising one or more processors and a communication interface, wherein the one or more processors are configured to read instructions, to perform the method according to any one of claims 1 to 15, or perform the method according to any one of claims 16 to 28.
